# EUROPÄISCHE PATENTSCHRIFT

(11) **EP 4 029 113 B1**
(45) Veröffentlichungstag und Bekanntmachung des Hinweises auf die Patenterteilung: **19.08.2026**
(21) Anmeldenummer: 20768597.5
(22) Anmeldetag: 09.09.2020
(51) Int. Cl.: H02K 1/04, B32B 7/12, H02K 15/02, B32B 15/04, B32B 15/18, H01F 41/02

(54) **VERFAHREN ZUR HERSTELLUNG EINES BLECHSTAPELS FÜR EINEN ELEKTROMOTOR**
METHOD FOR PRODUCING A STACK OF METAL SHEETS FOR AN ELECTRIC MOTOR
PROCÉDÉ DE FABRICATION D'UN EMPILEMENT DE FEUILLES MÉTALLIQUES POUR UN MOTEUR ÉLECTRIQUE

(30) Priorität: 09.09.2019 DE 102019213659
(43) Veröffentlichungstag der Anmeldung: 20.07.2022
(73) Patentinhaber: ElringKlinger AG, 72581 Dettingen (DE)
(72) Erfinder: REICHERT, Magnus, 72762 Reutlingen (DE); SCHAICH, Michael, 72555 Metzingen (DE); HASSLER, Florian, 72800 Eningen u.A. (DE); ANHORN, Fabienne, 72766 Reutlingen (DE); KOLASINSKI, Wojtek, 72770 Reutlingen (DE); BRAUN, Peter, 72622 Nürtingen (DE)
(74) Vertreter: DTS Patent- und Rechtsanwälte PartmbB
(86) Internationale Anmeldenummer: PCT/EP2020/075155
(87) Internationale Veröffentlichungsnummer: WO 2021/048175

(56) Entgegenhaltungen:
- JP-A- 2014 096 429
- JP-A- 2014 096 429
- US-A1- 2006 132 278
- US-A1- 2006 132 278

## Beschreibung

Die vorliegende Erfindung betrifft ein Verfahren zur Herstellung eines Blechstapels, insbesondere eines Elektroblechpakets.

Die US 2006/0132278 A1 beschreibt ein Verfahren zur Behandlung eines dünnen zerbrechlichen Metallstreifens.

Die JP 2014 096429 A beschreibt ein Verfahren zur Herstellung eines laminierten Kerns.

Verfahren zur Herstellung eines Blechstapels sind aus der WO 2014/089593 A1, der WO 2012/059588 A1 und der WO 2016/033630 A1 bekannt.

Der vorliegenden Erfindung liegt die Aufgabe zugrunde, ein Verfahren bereitzustellen, mittels welchem sich auf einfache und effiziente Art und Weise Blechstapel herstellen lassen.

Diese Aufgabe wird durch ein Verfahren gemäß Anspruch 1 gelöst.

Das Verfahren ist vorzugsweise ein Verfahren zur Herstellung mehrerer Blechstapel, welches insbesondere auch Verfahrensschritte umfasst, welche nach der eigentlichen Herstellung bis zur Auslieferung erfolgen.

Der eine oder die mehreren Blechstapel sind vorzugsweise Elektroblechpakete.

Das Verfahren umfasst Folgendes:
Beschichten eines oder mehrerer Bleche mit einem Verbindungsstoff;
Verbinden mehrerer Bleche zu einem Blechlaminat durch eine erste Aktivierung des Verbindungsstoffs;
Zerteilen des Blechlaminats zum Herstellen mehrerer Blechlaminateinheiten und/oder Herausteilen mehrerer Blechlaminateinheiten aus dem Blechlaminat; Verbinden der mehreren Blechlaminateinheiten zu einem Blechstapel durch eine zweite Aktivierung des Verbindungsstoffs.

Vorteilhaft kann es sein, wenn sich ein oder mehrere Parameter bei der ersten Aktivierung und der zweiten Aktivierung voneinander unterscheiden.

Dadurch, dass sich der eine oder die mehreren Parameter bei der ersten und der zweiten Aktivierung voneinander unterscheiden, lässt sich vorzugsweise das Verbinden der mehreren Bleche zu einem Blechlaminat und das Verbinden der mehreren Blechlaminateinheiten zeitlich voneinander getrennt durchführen.

Der Verbindungsstoff weist hierfür vorzugsweise Eigenschaften auf, welche eine zweistufige Aktivierung ermöglichen.

Es ist insbesondere ein mehrstufiges, beispielsweise zweitstufiges, Aktivieren des Verbindungsstoffs möglich.

Unter einem "Parameter" wird vorzugsweise eine Temperatur oder ein Druck verstanden.

Es kann ergänzend zu einer druckabhängigen und/oder temperaturabhängigen Aktivierung des Verbindungsstoffs vorgesehen sein, dass die erste Aktivierung und/oder die zweite Aktivierung durch Einstellung bestimmter weiterer Reaktionsbedingungen, beispielsweise unterschiedlicher pH-Werte, durchgeführt wird.

Das Verbinden der mehreren Bleche durch die erste Aktivierung des Verbindungsstoffs ist vorzugsweise ein stoffschlüssiges Verbinden.

Das Verbinden der mehreren Blechlaminateinheiten durch die zweite Aktivierung des Verbindungsstoffs ist insbesondere ein stoffschlüssiges Verbinden.

Günstig kann es sein, wenn der Verbindungsstoff ein Klebstoff ist.

Es kann vorgesehen sein, dass ein Blech beidseitig mit dem Verbindungsstoff beschichtet wird und anschließend beidseitig zu dem beschichteten Blech jeweils ein weiteres Blech in Kontakt mit den Beschichtungen gebracht wird. Die drei Bleche werden anschließend vorzugsweise durch die erste Aktivierung des Verbindungsstoffs, insbesondere stoffschlüssig, miteinander verbunden.

Bevorzugt wird jedoch eine beidseitige Beschichtung sämtlicher Bleche vorgenommen.

Als besonders verfahrenseffizient hat es sich erwiesen, exakt drei Bleche beidseitig mit dem Verbindungsstoff zu beschichten und diese anschließend miteinander zu verbinden.

Der Blechstapel ist beispielsweise ein Blechpaket.

Die Bleche sind beispielsweise Elektrobleche, insbesondere umfassend eine Eisen-Silizium-Legierung. Günstig kann es sein, wenn die Bleche durch Kaltwalzen hergestellt sind.

Das Beschichten des einen oder der mehreren Bleche mit dem Verbindungsstoff erfolgt vorzugsweise vollflächig. Dabei ist eine Dicke des Verbindungsstoffs nach dem Beschichten senkrecht zu einer Haupterstreckungsebene des jeweiligen Blechs vorzugsweise zumindest näherungsweise konstant.

Das Beschichten des einen oder der mehreren Bleche mit dem Verbindungsstoff erfolgt vorzugsweise blasenfrei und/oder entgasungsfrei.

Für einen optimierten Prozessablauf kann es günstig sein, wenn die erste Aktivierung und die zweite Aktivierung zeitlich nacheinander durchgeführt werden.

Das Verfahren ist vorzugsweise ein kontinuierliches Verfahren und/oder zur Serienproduktion von Blechstapeln geeignet.

Vorteilhaft kann es sein, wenn das Verbinden der mehreren Bleche zu einem Blechlaminat "inline" durchgeführt wird. "Inline" bedeutet vorzugsweise in einem kontinuierlichen Verfahren.

Das Verfahren ist vorzugsweise Teil einer Fließfertigung, bei welcher insbesondere eine örtlich fortschreitende, zeitlich bestimmte, lückenlose Folge von Arbeitsgängen realisiert ist.

Günstig kann es sein, wenn die erste Aktivierung eine thermische Aktivierung ist. Ergänzend oder alternativ ist die zweite Aktivierung eine thermische Aktivierung.

In Ausführungsformen, in welchen sowohl die erste Aktivierung als auch die zweite Aktivierung thermische Aktivierungen sind, ist der Verbindungsstoff vorzugsweise derart ausgewählt, dass er in zwei unterschiedlichen Temperaturbereichen reagiert. Es findet vorzugsweise in zwei unterschiedlichen Temperaturbereichen eine chemische und/oder physikalische Vernetzungs- und/oder Verklebungsreaktion statt.

Vorteilhaft kann es sein, wenn sich eine erste Temperatur, auf welche der Verbindungsstoff bei der ersten Aktivierung erwärmt wird, und eine zweite Temperatur, auf welche der Verbindungsstoff bei der zweiten Aktivierung erwärmt wird, um ca. 30°C oder mehr, insbesondere um ca. 40°C oder mehr, beispielsweise um ca. 50°C oder mehr, voneinander unterscheiden.

Die erste Temperatur und die zweite Temperatur unterscheiden sich vorzugsweise um 80°C oder weniger, insbesondere ca. 70°C oder weniger, beispielsweise ca. 60°C oder weniger, voneinander.

Ein Verhältnis der zweiten Temperatur bei der zweiten Aktivierung und der ersten Temperatur bei der ersten Aktivierung beträgt vorzugsweise 1,5:1 oder mehr, insbesondere ca. 2,5:1 oder mehr, beispielsweise ca. 3:1 oder mehr.

Ein Verhältnis der zweiten Temperatur bei der zweiten Aktivierung und der ersten Temperatur bei der ersten Aktivierung beträgt vorzugsweise 4,5:1 oder weniger, insbesondere ca. 4:1 oder weniger, beispielsweise ca. 3,5:1 oder weniger.

Alternativ zu der genannten Ausführungsform, in welcher sowohl die erste Aktivierung als auch die zweite Aktivierung thermische Aktivierungen sind, kann es günstig sein, wenn die erste Aktivierung eine thermische Aktivierung ist und die zweite Aktivierung eine Aktivierung durch Druck ist oder umgekehrt.

Gemäß einer weiteren Alternative sind sowohl die erste Aktivierung als auch die zweite Aktivierung Aktivierungen durch Druck.

Bei einer Aktivierung durch Druck werden die zu verbindenden Elemente vorzugsweise entlang einer Verbindungsrichtung gegeneinandergepresst. Die Verbindungsrichtung ist vorzugsweise im Wesentlichen senkrecht zu einer Haupterstreckungsebene der Bleche bzw. der Blechlaminateinheiten.

Es kann ergänzend oder alternativ vorgesehen sein, dass ein Reaktionsraum, in welchem die jeweilige Aktivierung durchgeführt wird, mit einem Überdruck oder einem Unterdruck beaufschlagt wird und so eine Aktivierung durch Druck durchgeführt wird.

Ergänzend oder alternativ kann vorgesehen sein, dass die erste Aktivierung und/oder die zweite Aktivierung eine chemische Aktivierung ist.

Bei einer chemischen Aktivierung wird vorzugsweise ein Reaktionsstartstoff, beispielsweise ein Radikalstarter und/oder ein Vernetzungsmittel, zum Zeitpunkt der Aktivierung zu dem Verbindungsstoff hinzugesetzt. Beispielsweise wird ein Gas in den Reaktionsraum eingeleitet.

Vorteilhaft kann es sein, wenn die mehreren Bleche, welche miteinander verbunden werden, aufgewickelt bereitgestellt werden. Insbesondere werden das eine oder die mehreren Bleche zur Beschichtung mit dem Verbindungsstoff abgewickelt.

Beispielsweise werden die Bleche zu einem Coil aufgewickelt bereitgestellt.

Es kann vorteilhaft sein, wenn das aus dem Verbinden der Bleche resultierende Blechlaminat aufgewickelt wird, bevor es in dem weiteren Verfahren behandelt wird. Bei einer Weiterverarbeitung des Blechlaminats wird dieses insbesondere abgewickelt.

Zum Herstellen des Blechlaminats werden die mehreren Bleche vorzugsweise nach dem Beschichten an ihren fluchtenden Flachseiten miteinander in Kontakt gebracht und/oder zusammengedrückt.

Es kann vorgesehen sein, dass die übereinander angeordneten Bleche in einem Presswerkzeug, beispielsweise einer Presse, zusammengedrückt werden. Das Zusammendrücken erfolgt vorzugsweise im Wesentlichen senkrecht zu einer Haupterstreckungsebene der Bleche.

Das Zusammendrücken und/oder ein Zusammenpressen der mit dem Verbindungsstoff beschichteten Bleche kann auch durch Rollen erfolgen, über welche die übereinander angeordneten und mit dem Verbindungsstoff beschichteten Bleche geführt werden.

In Ausführungsformen, in denen die mehreren Bleche Elektrobleche sind, kann vorgesehen sein, dass vor dem, insbesondere stoffschlüssigen, Verbinden der Bleche, mehrere Bleche in unterschiedlicher Ausrichtung bezüglich einer Pressrichtung angeordnet werden. So kann aufgrund einer Materialanisotropie der Elektrobleche ein erhöhter Wirkungsgrad als Statorpaket und/oder Rotorpaket des Blechstapels ausgebildet werden.

Vorzugsweise werden in Stapelrichtung aufeinanderfolgende Elektrobleche bezüglich einer Hauptkornorientierungsrichtung um ca. 30° bis ca. 120° gedreht übereinandergestapelt.

So kann bei einem resultierenden Elektroblechpaket, welches in einem Stator und/oder Rotor eingesetzt wird, eine Effizienzsteigerung bei gleichbleibenden oder reduzierten Kosten erreicht werden.

Beispielsweise werden zwei Bleche quer und zwei Bleche längs in einem Presswerkzeug, beispielsweise in einer Presse, angeordnet.

Alternativ oder ergänzend kann vorgesehen sein, dass mehrere Blechlaminateinheiten vor dem Verbinden durch die zweite Aktivierung des Verbindungsstoffs derart übereinandergestapelt werden, dass Hauptkornorientierungsrichtungen längs einer Stapelrichtung übereinander angeordneter Bleche in den einzelnen Blechlaminateinheiten versetzt zueinander angeordnet sind.

Die Hauptkornorientierungsrichtungen unterschiedlicher Bleche in dem resultierenden Blechstapel sind vorzugsweise nicht parallel, insbesondere windschief.

Das Blechlaminat ist vorzugsweise ein Flachmaterial, welches mehrere Schichten aus Blechen umfasst, die durch den Verbindungsstoff stoffschlüssig miteinander verbunden sind.

Es kann vorgesehen sein, dass die mehreren Bleche auf einer Rolle und/oder zu einer Rolle aufgewickelt bereitgestellt werden. Eine Breite der Rolle quer zu einer Aufwicklungsrichtung beträgt vorzugsweise ca. 100 mm oder mehr, insbesondere ca. 120 mm oder mehr, beispielsweise ca. 130 mm oder mehr.

Die Breite der Rolle beträgt vorzugsweise ca. 200 mm oder weniger, insbesondere ca. 180 mm oder weniger, beispielsweise ca. 160 mm oder weniger.

Beispielsweise sind die Rollen ca. 157,5 mm breit.

Es kann vorgesehen sein, dass vor und/oder nach dem Zerteilen des Blechlaminats und/oder dem Heraustrennen der mehreren Blechlaminateinheiten mehrere Blechlaminateinheiten längs einer Stapelrichtung aufeinander und/oder übereinandergestapelt werden, so dass insbesondere ein Stapel aus Blechlaminateinheiten entsteht.

Günstig kann es sein, wenn die Blechlaminateinheiten einzeln hergestellt und/oder aus dem Blechlaminat herausgetrennt werden und anschließend aufeinander gestapelt werden, bevor sie stoffschlüssig miteinander verbunden werden.

Es kann vorgesehen sein, dass mehrere Blechlaminate gleichzeitig zerteilt werden.

Die Stapelrichtung ist vorzugsweise senkrecht zu einer Haupterstreckungsebene des Blechlaminats und/oder einer Haupterstreckungsebene eines Blechs.

Vorteilhaft kann es sein, wenn die mehreren Bleche in, insbesondere beidseitig, vorbeschichteter Form bereitgestellt werden.

Vorzugsweise umfasst die Vorbeschichtung einen oder mehrere der folgenden Stoffe oder ist aus einem oder mehreren der folgenden Stoffe gebildet: Polyvinylbutyral, Polyamid, Polyester, modifiziertes Polyamid, Epoxid.

Die Vorbeschichtung dient insbesondere einer verbesserten Haftung des Verbindungsstoffs an einer Blechoberfläche.

Als Vorbeschichtung eignet sich beispielsweise ein sogenannter "Backlack". Produkte unter der Bezeichnung "NO20" haben sich als besonders bevorzugt erwiesen.

Die Vorbeschichtung ist vorzugsweise bereits ausgehärtet, wenn der Verbindungsstoff aufgetragen wird.

Günstig kann es sein, wenn die Vorbeschichtung elektrisch isolierend ist.

"Elektrisch isolierend" bedeutet vorzugsweise, dass ein derartig charakterisiertes Material und/oder Bauteil und/oder Element eine elektrische Leitfähigkeit von ca. 10⁻⁷ S·cm⁻¹ oder weniger, insbesondere von ca. 10⁻⁸ S·cm⁻¹ oder weniger, aufweist. Die Werte sind jeweils auf Messungen unter Standardbedingungen bezogen.

Wie bereits erwähnt, ist es besonders bevorzugt, wenn die mehreren Bleche jeweils beidseitig mit dem Verbindungsstoff beschichtet werden.

Der Verbindungsstoff wird vor der Beschichtung mit einem Lösungsmittel versetzt, welches insbesondere direkt nach der Beschichtung und/oder während der ersten Aktivierung entweicht.

Günstig kann es sein, wenn ein Verhältnis zwischen einer Dicke des einen oder der mehreren Bleche und einer Schichtdicke des Verbindungsstoffs in einem Bereich von ca. 20:1 oder mehr, insbesondere 25:1 oder mehr, liegt.

Vorzugsweise beträgt das Verhältnis zwischen der Dicke des einen oder der mehreren Bleche und der Schichtdicke des Verbindungsstoffs ca. 250:1 oder weniger, insbesondere ca. 210:1 oder weniger.

Vorzugsweise beträgt die Schichtdicke des Verbindungsstoffs nach dem Auftragen und/oder nach der ersten Aktivierung ca. 1 µm oder mehr, insbesondere ca. 4 µm oder mehr, beispielsweise ca. 5 µm oder mehr.

Die Schichtdicke des Verbindungsstoffs beträgt nach dem Auftragen und/oder nach der ersten Aktivierung vorzugsweise ca. 9 µm oder weniger, insbesondere ca. 8 µm oder weniger, beispielsweise ca. 7 µm oder weniger.

Beispielsweise beträgt die Schichtdicke des Verbindungsstoffs ca. 6 µm.

Die Schichtdicke des Verbindungsstoffs ist vorzugsweise eine durchschnittliche Schichtdicke senkrecht zu der Haupterstreckungsebene des jeweiligen Blechs nach der Beschichtung.

Die Schichtdicke bezeichnet insbesondere jeweils die Dicke einer einzigen Schicht auf einer einzelnen Seite des jeweiligen Blechs.

Die Dicke des einen oder der mehreren Bleche bezeichnet vorzugsweise die Dicke exakt eines Blechs.

Gemäß einer bevorzugten Ausführungsform ist die erste Aktivierung eine thermische Aktivierung, bei welcher der Verbindungsstoff auf eine erste Temperatur erwärmt wird.

Die erste Temperatur bei der ersten Aktivierung liegt vorzugsweise bei ca. 50°C oder mehr, insbesondere bei ca. 60°C oder mehr.

Die erste Temperatur bei der ersten Aktivierung liegt vorzugsweise bei ca. 90°C oder weniger, insbesondere bei ca. 80°C oder weniger.

Vorteilhaft kann es sein, wenn der Verbindungsstoff bei der ersten Aktivierung mittels einer Heizeinrichtung erwärmt wird.

Als Heizeinrichtung wird insbesondere eine Infrarot-Heizeinrichtung, eine Widerstandsheizeinrichtung und/oder eine Induktionsheizeinrichtung verwendet.

Bei der ersten Temperatur und/oder der zweiten Temperatur handelt es sich vorzugsweise um diejenige Temperatur, welche in einem Raum, in welchem die erste Aktivierung bzw. die zweite Aktivierung durchgeführt wird, eingestellt wird.

Nach der ersten Aktivierung wird das resultierende Blechlaminat vorzugsweise mittels einer Kühleinrichtung auf Raumtemperatur (ca. 20°C) abgekühlt und/oder getrocknet.

Die Kühleinrichtung ist vorzugsweise Teil eines aktiven Kühlkanals, durch welche das Blechlaminat hindurchgeführt wird.

Durch die erste Aktivierung wird vorzugsweise eine Vorkonsolidierung der mehreren Bleche durchgeführt.

Das Blechlaminat ist beispielsweise ein Compoundblech.

Eine Dicke der Bleche senkrecht zu ihrer Haupterstreckungsebene beträgt vorzugsweise ca. 0,3 mm oder weniger, insbesondere ca. 0,25 mm oder weniger, beispielsweise ca. 0,2 mm oder weniger.

Die Dicke der Bleche senkrecht zu Ihrer Haupterstreckungsebene beträgt vorzugsweise ca. 0,05 mm oder mehr, insbesondere ca. 0,1 mm oder mehr, beispielsweise ca. 0,15 mm oder mehr.

Vorzugsweise weisen sämtliche Bleche dieselbe Dicke auf.

Unter einer "Dicke" ist vorzugsweise eine durchschnittliche Dicke zu verstehen.

Günstig kann es sein, wenn die Bleche und/oder Blechlaminate eben und/oder planar, insbesondere parallel und/oder senkrecht zu ihren Haupterstreckungsebenen, ausgebildet sind.

Die Bleche und/oder Blechlaminateinheiten sind vorzugsweise vorsprungfrei und/oder rücksprungfrei ausgebildet.

Beispielsweise sind sogenannte "Interlocks" entbehrlich.

Vorteilhaft kann es sein, wenn eine lokale Dickenvariation der Bleche und/oder Blechlaminateinheiten ca. 5 % oder weniger, insbesondere ca. 2 % oder weniger, bezogen auf eine durchschnittliche Dicke des jeweiligen Blechs und/oder der jeweiligen Blechlaminateinheit beträgt.

Die lokale Dickenvariation ist vorzugsweise unabhängig von Öffnungen und/oder Ausnehmungen in den Blechen.

Für eine zeiteffiziente Verfahrensführung kann es vorteilhaft sein, wenn die zweite Aktivierung des Verbindungsstoffs während des Zerteilens des Blechlaminats zum Herstellen der mehreren Blechlaminateinheiten und/oder dem Heraustrennen der mehreren Blechlaminateinheiten aus dem Blechlaminat durchgeführt wird.

Ergänzend oder alternativ wird die zweite Aktivierung des Verbindungsstoffs, insbesondere unmittelbar, nach dem Zerteilen des Blechlaminats zum Herstellen der mehreren Blechlaminateinheiten und/oder dem Heraustrennen der mehreren Blechlaminateinheiten aus dem Blechlaminat durchgeführt.

Hierbei werden beispielsweise Blechlaminateinheiten in einem Presswerkzeug gestapelt gesammelt und/oder innerhalb des Presswerkzeugs wird die zweite Aktivierung durchgeführt.

Vorteilhaft kann es sein, wenn das Zerteilen des Blechlaminats zum Herstellen der mehreren Blechlaminateinheiten und/oder das Heraustrennen der mehreren Blechlaminateinheiten aus dem Blechlaminat durch Stanzen erfolgt.

Ergänzend oder alternativ kann das Zerteilen des Blechlaminats und/oder Heraustrennen der mehreren Blechlaminateinheiten durch elektromagnetisches Umformen erfolgen.

Hierzu wird vorzugsweise eine Materialschwächung, beispielsweise durch Scherschneiden und/oder Keilschneiden und/oder Prägen, in das Blechlaminat eingebracht.

Anschließend und/oder währenddessen wird das Blechlaminat vorzugsweise durch Erzeugen eines elektromagnetischen Impulses, beispielsweise durch einen Impulsgenerator, zerteilt.

Das Zerteilen des Blechlaminats und/oder das Heraustrennen der mehreren Blechlaminateinheiten erfolgt vorzugsweise teilweise oder vollständig durch Scherschneiden und/oder Keilschneiden und/oder Prägen.

Es kann vorgesehen sein, dass Bereiche des Blechlaminats, in welchen das Zerteilen und/oder das Heraustrennen erfolgt, vor und/oder während des Zerteilens und/oder des Heraustrennens, insbesondere lokal, vorgewärmt werden. Die lokale Vorwärmung erfolgt vorzugsweise durch einen Laser.

Es kann vorgesehen sein, dass ein Feinstanzwerkzeug in ein Presswerkzeug, beispielsweise in eine konventionelle Presse, integriert wird.

Durch die Integration eines Feinstanzwerkzeugs in das Presswerkzeug sind insbesondere hohe Stanzkantenqualitäten ausbildbar und/oder es können Kosten reduziert werden, da insbesondere auf bereits vorhandene Presswerkzeuge zurückgegriffen werden kann.

Durch die, insbesondere lokale, Vorwärmung sind vorzugsweise optimierte Schnittkantenqualitäten erhältlich. Beispielsweise ist ein Kanteneinzug der zerteilten und/oder herausgetrennten Blechlaminateinheiten reduziert.

Insgesamt kann es günstig sein, wenn ein geringer Stanzgrad gewählt wird, so dass die resultierenden Blechlaminateinheiten mit möglichst geringem Luftspalt übereinander stapelbar sind.

Durch den möglichst geringen Kanteneinzug bilden die Blechlaminateinheiten insbesondere ein möglichst großes Volumen in dem resultierenden Blechstapel.

Es kann vorgesehen sein, dass mehrere Blechlaminateinheiten und/oder mehrere Blechstapel durch Umformen gefügt werden. Beispielsweise werden mehrere Blechlaminateinheiten und/oder mehrere Blechstapel durch Durchsetzfügen bearbeitet und/oder geclincht.

Es kann vorgesehen sein, dass während und/oder nach dem Zerteilen des Blechlaminats zum Herstellen der mehreren Blechlaminateinheiten und/oder dem Heraustrennen mehrerer Blechlaminateinheiten aus dem Blechlaminat die Blechlaminateinheiten durch Umformen gefügt werden.

Beispielsweise werden die Blechlaminateinheiten und/oder Blechstapel durch Durchsetzfügen, beispielsweise Clinchen, gefügt.

Ein Hub eines verwendeten Stanzwerkzeugs beträgt vorzugsweise 275 pro Stack. Unter "Stack" ist beispielsweise eine Dicke eines Blechlaminats und/oder eine Höhe eines Stapels aus Blechlaminateinheiten und/oder eine Dicke des Blechstapels zu verstehen.

Die Dicke des Blechlaminats ist vorzugsweise senkrecht zu dessen Haupterstreckungsebene definiert.

Die Höhe des Stapels aus Blechlaminateinheiten ist vorzugsweise parallel zu der Stapelrichtung definiert.

Die Dicke des Blechstapels ist vorzugsweise senkrecht zu einer Haupterstreckungsebene eines Blechs definiert.

Es kann vorgesehen sein, dass die Blechstapel in einem Behälter, beispielsweise einem Kleinladungsträger, gestapelt und/oder zur weiteren Verarbeitung transportiert werden.

Vorzugsweise ist die zweite Aktivierung des Verbindungsstoffs eine thermische Aktivierung, bei welcher der Verbindungsstoff auf eine zweite Temperatur erwärmt wird.

Die zweite Temperatur liegt vorzugsweise bei ca. 120°C oder mehr, insbesondere bei ca. 130°C oder mehr.

Günstig kann es sein, wenn die zweite Temperatur bei ca. 250°C oder weniger, insbesondere bei ca. 180°C oder weniger, liegt.

Das Verbinden der mehreren Blechlaminateinheiten erfolgt vorzugsweise unter Druck, insbesondere in einem Presswerkzeug, beispielsweise einer Presse.

Vorteilhaft kann es sein, wenn ein Stanzwerkzeug zum Stanzen der Blechlaminateinheiten innerhalb des Presswerkzeugs angeordnet und/oder in dieses integriert ist.

Günstig kann es sein, wenn die Blechlaminateinheiten längs der Stapelrichtung, insbesondere vollflächig, aneinandergepresst werden. Dies wird vorzugsweise innerhalb des Presswerkzeugs durchgeführt.

Es kann vorgesehen sein, dass, insbesondere nach einem Stapeln mehrerer Blechstapel, eine Kennzeichnung der Blechstapel vorgenommen wird. Die Kennzeichnung wird insbesondere mittels eines Data Matrix Codes und/oder mittels Laserbeschriftung vorgenommen.

Ergänzend oder alternativ werden die Blechlaminateinheiten vor dem Verbinden gekennzeichnet.

Für eine reproduzierbare Verfahrensdurchführung kann es günstig sein, wenn eine Qualitätskontrolle der Blechstapel durchgeführt wird.

Die eingangs genannte Aufgabe wird ferner durch ein Verfahren zur Herstellung eines Blechstapels, insbesondere eines Elektroblechpakets, gelöst, wobei das Verfahren vorzugsweise Folgendes umfasst:
Beschichten eines oder mehrerer Bleche mit einem Verbindungsstoff;
Verbinden mehrerer Bleche zu einem Blechlaminat durch eine erste Aktivierung des Verbindungsstoffs;
Zerteilen des Blechlaminats zum Herstellen mehrerer Blechlaminateinheiten und/oder Herausteilen mehrerer Blechlaminateinheiten aus dem Blechlaminat;
Verbinden der mehreren Blechlaminateinheiten zu einem Blechstapel durch eine zweite Aktivierung des Verbindungsstoffs.

Der Verbindungsstoff umfasst ein Harzmaterial und ein Elastomermaterial.

Das Harzmaterial ist vorzugsweise ein synthetisches Harzmaterial.

Durch die unterschiedlichen Bestandteile des Verbindungsstoffs kann vorzugsweise eine mehrstufige Aktivierung und/oder Verklebung der Bleche erfolgen.

Vorzugsweise dient das Elastomermaterial einer Verklebung durch Adhäsion. Insbesondere dient das Harzmaterial einer Verklebung durch Kohäsion.

Vorteilhaft kann es sein, wenn das Elastomermaterial bei der ersten Aktivierung verklebt und/oder reagiert. Das Harzmaterial verklebt und/oder reagiert bei der ersten Aktivierung vorzugsweise nicht.

Günstig kann es sein, wenn das Harzmaterial bei der zweiten Aktivierung verklebt und/oder reagiert. Das Elastomermaterial verklebt und/oder reagiert bei der zweiten Aktivierung vorzugsweise nicht.

Vorzugsweise bildet der Verbindungsstoff und/oder ein Verbindungsstoff-Lösungsmittel-Gemisch eine makroskopisch homogene Masse und/oder eine makroskopisch homogene Flüssigkeit.

Vorzugsweise wird der Verbindungsstoff mit einem Lösungsmittel versetzt, bevor er auf das eine oder die mehreren Bleche aufgetragen wird.

Vorteilhaft kann es sein, wenn ein Verbindungsstoff-Lösungsmittel-Gemisch auf das eine oder die mehreren Bleche aufgetragen ist.

Unter einem Verbindungsstoff-Lösungsmittel-Gemisch ist ein, insbesondere homogenes, Stoffgemisch aus dem Verbindungsstoff und dem Lösungsmittel zu verstehen. Insbesondere ist der Verbindungsstoff im Wesentlichen vollständig in dem Lösungsmittel gelöst und/oder dispergiert.

Durch die Beschichtung des einen oder der mehreren Bleche mit dem Verbindungsstoff ist vorzugsweise eine vollständige Bedeckung einer Oberfläche des jeweiligen Blechs mit dem Verbindungsstoff ausgebildet.

Günstig kann es sein, wenn der Verbindungsstoff das Elastomermaterial in einem Anteil von ca. 1 Vol.-% oder mehr, insbesondere von ca. 5 Vol.-% oder mehr, bezogen auf ein Gesamtvolumen des Verbindungsstoffs oder bezogen auf ein Gesamtvolumen des Verbindungsstoff-Lösungsmittel-Gemischs, enthält.

Vorzugsweise beträgt der Anteil des Elastomermaterials an dem Verbindungsstoff ca. 25 Vol.-% oder weniger, insbesondere ca. 20 Vol.-% oder weniger, bezogen auf das Gesamtvolumen des Verbindungsstoffs oder bezogen auf das Gesamtvolumen des Verbindungsstoff-Lösungsmittel-Gemischs.

Günstig kann es sein, wenn der Verbindungsstoff das Elastomermaterial in einem Anteil von ca. 1 Gew.-% oder mehr, insbesondere von ca. 5 Gew.-% oder mehr, bezogen auf eine Gesamtmasse des Verbindungsstoffs oder auf eine Gesamtmasse des Verbindungsstoff-Lösungsmittel-Gemischs, enthält.

Vorzugsweise beträgt der Anteil des Elastomermaterials an dem Verbindungsstoff ca. 25 Gew.-% oder weniger, insbesondere ca. 20 Gew.-% oder weniger, bezogen auf die Gesamtmasse des Verbindungsstoffs oder bezogen auf die Gesamtmasse des Verbindungsstoff-Lösungsmittel-Gemischs.

Günstig kann es sein, wenn das Elastomermaterial ein Synthese-Kautschukmaterial umfasst oder daraus gebildet ist.

Gemäß einer bevorzugten Ausführungsform umfasst das Elastomermaterial einen Acrylnitril-Butadien-Kautschuk oder ist daraus gebildet.

"Acrylnitril-Butadien-Kautschuk" ist vorzugsweise gleichbedeutend mit "Nitril-Butadien-Rubber".

Acrylnitril-Butadien-Kautschuke haben den Vorteil, dass sie vorzugsweise eine hohe Beständigkeit gegenüber Mineralölen, Fetten und/oder Kohlenwasserstoffen aufweisen.

Ergänzend oder alternativ zu einem Acrylnitril-Butadien-Kautschuk kann das Elastomermaterial einen Styrol-Butadien-Kautschuk umfassen oder daraus gebildet sein.

Der Verbindungsstoff ist vorzugsweise derart ausgewählt, dass eine Shore-Härte A des Verbindungsstoffs nach einem Entweichen des Lösungsmittels kleiner ist als nach der zweiten Aktivierung.

Ergänzend oder alternativ ist die Shore-Härte A des Verbindungsstoffs vor der ersten Aktivierung und/oder vor einem Entweichen des Lösungsmittels kleiner als nach der zweiten Aktivierung.

Die Shore-Härte wird vorzugsweise gemäß einer der Normen DIN EN ISO 868, DIN ISO 7619-1 und/oder ASTM D2240-00 bestimmt. Insbesondere wird die Shore-Härte A nach der DIN 53505 bestimmt.

Vorteilhaft kann es sein, wenn die Shore-Härte A des Verbindungsstoffs allein und/oder die Shore-Härte A des Verbindungsstoff-Lösungsmittel-Gemischs ca. 20 oder mehr, insbesondere ca. 30 oder mehr, beträgt.

Vorteilhaft kann es sein, wenn die Shore-Härte A des Verbindungsstoffs allein und/oder die Shore-Härte A des Verbindungsstoff-Lösungsmittel-Gemischs ca. 90 oder weniger, insbesondere ca. 80 oder weniger, beträgt.

Vorzugsweise ist der Verbindungsstoff elektrisch isolierend. Insbesondere ist das Verbindungsstoff-Lösungsmittel-Gemisch elektrisch isolierend.

Insbesondere ist der Verbindungsstoff nach der ersten Aktivierung elektrisch isolierend. Ergänzend oder alternativ ist der Verbindungsstoff nach der zweiten Aktivierung elektrisch isolierend.

Günstig kann es sein, wenn das Harzmaterial ein Epoxyharzmaterial und/oder ein duroplastisches Polymermaterial umfasst oder daraus gebildet ist.

Als duroplastische Polymermaterialien sind Phenolharz-Polymermaterialien besonders geeignet.

Vorteilhaft kann es sein, wenn ein Phenolharz-Polymermaterial mit einem Formaldehyd-Phenol-Verhältnis von kleiner als 1:1 als Harzmaterial verwendet wird.

Derartige Phenolharz-Polymermaterialien können vorzugsweise durch saure Kondensation der Edukte erhalten werden.

Beispielsweise umfasst das Harzmaterial Novolak oder ist daraus gebildet. Novolake sind vorzugsweise thermoplastisch und können durch Zusätze von Formaldehydquellen, beispielsweise Hexamethyltetraamin, gehärtet werden.

Vorteilhaft kann es sein, wenn ein Anteil des Harzmaterials an dem Verbindungsstoff bei ca. 1 Vol.-% oder mehr, insbesondere ca. 2 Vol.-% oder mehr, liegt. Der Anteil ist vorzugsweise bezogen auf das Gesamtvolumen des Verbindungsstoffs oder bezogen auf das Gesamtvolumen des Verbindungsstoff-Lösungsmittel-Gemischs.

Vorzugsweise beträgt der Anteil des Harzmaterials an dem Verbindungsstoff ca. 15 Vol.-% oder weniger, insbesondere ca. 10 Vol.-% oder weniger, bezogen auf das Gesamtvolumen des Verbindungsstoffs oder auf das Gesamtvolumen des Verbindungsstoff-Lösungsmittel-Gemischs.

Vorteilhaft kann es sein, wenn ein Anteil des Harzmaterials an dem Verbindungsstoff bei ca. 1 Gew.-% oder mehr, insbesondere bei ca. 2 Gew.-% oder mehr, liegt. Der Anteil ist vorzugsweise bezogen auf die Gesamtmasse des Verbindungsstoffs oder bezogen auf die Gesamtmasse des Verbindungsstoff-Lösungsmittel-Gemischs.

Vorzugsweise beträgt der Anteil des Harzmaterials an dem Verbindungsstoff ca. 15 Gew.-% oder weniger, insbesondere ca. 10 Gew.-% oder weniger, bezogen auf die Gesamtmasse des Verbindungsstoffs oder auf die Gesamtmasse des Verbindungsstoff-Lösungsmittel-Gemischs.

Für eine verbesserte Auftragbarkeit des Verbindungsstoffs kann es - wie bereits erwähnt - günstig sein, wenn der Verbindungsstoff gemäß dem beanspruchten Verfahren vor der Beschichtung des einen oder der mehreren Bleche mit einem Lösungsmittel versetzt wird.

Ein Anteil des Lösungsmittels liegt vorzugsweise bei ca. 65 Vol.-% oder mehr, insbesondere bei ca. 70 Vol.-% oder mehr, bezogen auf das Gesamtvolumen des Verbindungsstoff-Lösungsmittel-Gemischs.

Vorzugsweise beträgt der Anteil des Lösungsmittels ca. 95 Vol.-% oder weniger, insbesondere ca. 90 Vol.-% oder weniger, bezogen auf das Gesamtvolumen des Verbindungsstoff-Lösungsmittel-Gemischs.

Ein Anteil des Lösungsmittels liegt vorzugsweise bei ca. 65 Gew.-% oder mehr, insbesondere bei ca. 70 Gew.-% oder mehr, bezogen auf die Gesamtmasse des Verbindungsstoff-Lösungsmittel-Gemischs.

Vorzugsweise beträgt der Anteil des Lösungsmittels ca. 95 Gew.-% oder weniger, insbesondere ca. 90 Gew.-% oder weniger, bezogen auf die Gesamtmasse des Verbindungsstoff-Lösungsmittel-Gemischs.

Vorteilhaft kann es sein, wenn der Verbindungsstoff nach der zweiten Aktivierung im Wesentlichen Edukt-frei ist.

Ein Reaktionsumsatz einer Vernetzungsreaktion des Verbindungsstoffs beträgt nach der zweiten Aktivierung vorzugsweise ca. 40 % oder mehr, insbesondere ca. 50 % oder mehr, beispielsweise ca. 60 % oder mehr.

Der Reaktionsumsatz der Vernetzungsreaktion des Verbindungsstoffs beträgt nach der zweiten Aktivierung vorzugsweise ca. 90 % oder weniger, insbesondere ca. 80 % oder weniger, beispielsweise ca. 70 % oder weniger.

Das Lösungsmittel, mit welchem der Verbindungsstoff versetzt wird, umfasst insbesondere ein oder mehrere mittelflüchtige bis leichtflüchtige organische Lösungsmittel oder ist daraus gebildet.

Eine nach DIN 53170 bestimmte Verdunstungszahl des Lösungsmittels beträgt 300 oder weniger, insbesondere ca. 280 oder weniger, beispielsweise ca. 250 oder weniger.

Die Verdunstungszahl des Lösungsmittels liegt bei 7 oder mehr, insbesondere bei ca. 8 oder mehr, beispielsweise bei ca. 10 oder mehr.

Die Verdunstungszahl gibt insbesondere ein Verhältnis einer Zeit, in der ein zu testender Stoff komplett verdunstet, und einer Zeit, in der Diethylether komplett verdunstet, an.

Gemäß einer bevorzugten Ausführungsform umfasst das Lösungsmittel eine Mischung aus Methoxypropylacetat und Butylacetat oder ist daraus gebildet.

Ein Volumenverhältnis von Methoxypropylacetat und Butylacetat beträgt vorzugsweise 10:1 oder weniger, insbesondere ca. 8:1 oder weniger, insbesondere ca. 6:1 oder weniger.

Das Volumenverhältnis von Methoxypropylacetat und Butylacetat liegt vorzugsweise bei ca. 2:1 oder mehr, insbesondere bei ca. 3:1 oder mehr, beispielsweise bei ca. 4:1 oder mehr.

Beispielsweise werden Methoxypropylacetat und Butylacetat in einem Volumenverhältnis von ca. 1:1 gemischt.

Für eine optimierte Haftung des Verbindungsstoffs an dem einen oder den mehreren Blechen kann es vorteilhaft sein, wenn der Verbindungsstoff einen Haftvermittler umfasst.

Der Haftvermittler umfasst vorzugsweise ein organisch funktionalisiertes Silan oder ist daraus gebildet. Vorzugsweise umfasst der Haftvermittler ein Aminosilan oder ist daraus gebildet.

Ergänzend oder alternativ zu Aminosilanen werden vorzugsweise Epoxysilane als organisch funktionalisierte Silane eingesetzt.

Vorzugsweise kann eine Benetzbarkeit von Oberflächen der zu beschichtenden Bleche durch die Verwendung des Haftvermittlers erhöht werden.

Eine Ausbildung chemischer Bindungen zwischen den Oberflächen der Bleche und Bestandteilen des Verbindungsstoffs werden durch den Haftvermittler insbesondere begünstigt.

Es kann vorgesehen sein, dass die Vorbeschichtung der mehreren Bleche als Haftvermittler wirkt.

Ein Anteil des Haftvermittlers liegt vorzugsweise bei ca. 0,5 Vol.-% oder mehr, insbesondere bei ca. 1 Vol.-% oder mehr, bezogen auf das Gesamtvolumen des Verbindungsstoffs oder bezogen auf das Gesamtvolumen des Verbindungsstoff-Lösungsmittel-Gemischs.

Vorzugsweise beträgt der Anteil des Haftvermittlers ca. 6 Vol.-% oder weniger, insbesondere ca. 5 Vol.-% oder weniger, bezogen auf das Gesamtvolumen des Verbindungsstoffs oder bezogen auf das Gesamtvolumen des Verbindungsstoff-Lösungsmittel-Gemischs.

Der Anteil des Haftvermittlers liegt vorzugsweise bei ca. 0,5 Gew.-% oder mehr, insbesondere bei ca. 1 Gew.-% oder mehr, bezogen auf die Gesamtmasse des Verbindungsstoffs oder bezogen auf die Gesamtmasse des Verbindungsstoff-Lösungsmittel-Gemischs.

Vorzugsweise beträgt der Anteil des Haftvermittlers ca. 6 Gew.-% oder weniger, insbesondere ca. 5 Gew.-% oder weniger, bezogen auf die Gesamtmasse des Verbindungsstoffs oder bezogen auf die Gesamtmasse des Verbindungsstoff-Lösungsmittel-Gemischs.

Der Verbindungsstoff wird vorzugsweise derart ausgewählt, dass ein E-Modul des Verbindungsstoffs allein und/oder ein E-Modul des Verbindungsstoff-Lösungsmittel-Gemischs bei ca. 100 N/mm² oder mehr, insbesondere bei ca. 300 N/mm², liegt.

Vorzugsweise beträgt der E-Modul des Verbindungsstoffs allein und/oder der E-Modul des Verbindungsstoff-Lösungsmittel-Gemischs ca. 1000 N/mm² oder weniger, insbesondere ca. 800 N/mm² oder weniger.

Die angegebenen E-Module beziehen sich vorzugsweise auf eine Messung bei ca. 20°C.

Vorteilhaft kann es sein, wenn der Verbindungsstoff, insbesondere als Verbindungsstoff-Lösungsmittel-Gemisch, mittels eines oder mehrerer der folgenden Beschichtungsverfahren auf das eine oder die mehreren Bleche aufgebracht wird: Sprühen, Streichen, Gießen.

Eine bevorzugte Zusammensetzung des Verbindungsstoffs besteht aus einem Acrylnitril-Butadien-Kautschuk, Novolak und Aminosilan. Zur Herstellung des Verbindungsstoff-Lösungsmittel-Gemischs wird der Verbindungsstoff vorzugsweise mit einer Mischung aus Methoxypropylacetat und Butylacetat versetzt.

Die mehreren Blechlaminateinheiten weisen vorzugsweise eine zumindest näherungsweise runde Grundform senkrecht zu ihren Haupterstreckungsebenen auf.

Vorteilhaft kann es sein, wenn die mehreren Blechlaminateinheiten zentral jeweils eine zumindest näherungsweise kreisförmige Öffnung aufweisen. Jede Öffnung ist insbesondere in einer Draufsicht konzentrisch mit einem Außenumfang der jeweiligen Blechlaminateinheit.

Günstig kann es sein, wenn die mehreren Blechlaminateinheiten zu einem Rand hin mehrere, insbesondere in Umfangsrichtung regelmäßig angeordnete, Ausnehmungen aufweisen. Die mehreren Ausnehmungen sind beispielsweise Durchtrittsöffnungen.

Die mehreren Ausnehmungen sind vorzugsweise ringförmig angeordnet.

Insbesondere sind die mehreren Ausnehmungen zumindest näherungsweise länglich ausgebildet, wobei ihre Haupterstreckungsrichtungen jeweils entlang radialer Richtungen bezüglich einer Zentralachse der jeweiligen Blechlaminateinheit verlaufen. Die Zentralachse ist vorzugsweise eine Mittelachse durch die zentral angeordnete Öffnung.

In dem Blechstapel sind die Öffnungen und/oder die mehreren Ausnehmungen der einzelnen Blechlaminate vorzugsweise im Wesentlichen deckungsgleich angeordnet.

Ein Blechstapel, insbesondere ein Rotorpaket und/oder ein Statorpaket, kann mehrere Blechlaminateinheiten umfassen. Eine oder mehrere Blechlaminateinheiten umfassen vorzugsweise exakt drei Bleche, welche jeweils beidseitig mit einem Verbindungsstoff beschichtet sind. Der Blechstapel ist insbesondere nach einem erfindungsgemäßen Verfahren hergestellt.

Einzelne oder mehrere der im Zusammenhang mit den erfindungsgemäßen Verfahren genannten Merkmale und/oder Vorteile gelten vorzugsweise für den Blechstapel gleichermaßen.

Es kann vorgesehen sein, dass eine Dicke jedes Blechs senkrecht zu seiner Haupterstreckungsebene höchstens ca. 0,3 mm, insbesondere höchstens ca. 0,25 mm, insbesondere höchstens 0,2 mm, beträgt.

Günstig kann es sein, wenn die Bleche der Blechlaminateinheiten senkrecht und/oder parallel zu einer Haupterstreckungsebene zumindest eines Blechs eben ausgebildet sind.

Ergänzend oder alternativ sind die Bleche und/oder Blechlaminateinheiten frei von Vorsprüngen und/oder Rücksprüngen ausgebildet.

Sogenannte "Interlocks" zur Sicherung gegen eine Verschiebung der Bleche und/oder Bleichlaminateinheiten entlang einer in einer jeweiligen Haupterstreckungsebene der Bleche und/oder Bleichlaminateinheiten verlaufenden Richtung sind vorzugsweise entbehrlich.

Vorteilhaft kann es sein, wenn der Blechstapel fluiddicht ist, insbesondere längs quer zu Haupterstreckungsebenen der Bleche verlaufender Richtungen.

Insbesondere aufgrund einer Elastizität und/oder einer Flexibilität des Verbindungsstoffs nach einer Vernetzungsreaktion weist der Blechstapel vorzugsweise eine Querdichtigkeit auf.

Günstig kann es sein, wenn ein Übergang zwischen den Blechen und dem Verbindungsstoff, insbesondere dauerhaft, fluiddicht ausgebildet ist.

Aufgrund der Fluiddichtigkeit kann ein Kriechen und/oder Wandern von Fluiden, beispielsweise Kühlmedium und/oder Öl, durch den Blechstapel verhindert werden.

Beispielsweise sind Mikrobewegungen der Bleche von dem Verbindungsstoff aufnehmbar und/oder absorbierbar. So kann die Verbindung des Verbindungsstoffs und der Bleche über die Lebensdauer des Blechstapels unverändert bleiben.

Ein Maschinenbauteil, insbesondere ein Rotor und/oder ein Stator, kann einen oder mehrere Blechstapel, hergestellt nach einem erfindungsgemäßen Verfahren, umfassen.

Einzelne oder mehrere der im Zusammenhang mit den erfindungsgemäßen Verfahren oder dem Blechstapel genannten Merkmale und/oder Vorteile gelten vorzugsweise für das Maschinenbauteil gleichermaßen.

Ein Elektromotor kann ein Gehäuse, einen Rotor und einen Stator umfassen, wobei der Rotor und/oder der Stator Maschinenbauteile sind.

Einzelne oder mehrere der im Zusammenhang mit den erfindungsgemäßen Verfahren oder dem erfindungsgemäßen Blechstapel genannten Merkmale und/oder Vorteile gelten vorzugsweise für den Elektromotor gleichermaßen.

Der Elektromotor wird insbesondere in einem Fahrzeug, beispielsweise einem Kraftfahrzeug, verwendet.

Günstig kann es sein, wenn der Elektromotor eine Kühlvorrichtung aufweist, welche eine Kühlmediumführung umfasst, die an einer dem Rotor abgewandten Seite des Stators verläuft und/oder vom Stator begrenzt ist.

Insbesondere ist ein mittels der Kühlvorrichtung geführtes Kühlmedium in direktem stofflichem und/oder thermischem Kontakt mit dem Stator.

Der Stator ist mittels der Kühlvorrichtung insbesondere von außen direkt anströmbar.

Ein Statorträger ist vorzugsweise entbehrlich.

Ergänzend oder alternativ zur Kühlmediumführung zur unmittelbaren Kühlung des Stators umfasst die Kühlvorrichtung insbesondere ein Kühlmediumführungselement, das an einer dem Stator abgewandten Seite des Rotors, insbesondere direkt, an dem Rotor entlang verläuft. Beispielsweise ist das Kühlmediumführungselement teilweise oder vollständig durch eine Wandung des Rotors gebildet.

Beispielsweise ist das Kühlmediumführungselement durch einen radial innenliegenden Innenraum des Rotors hindurchgeführt.

"Radial innenliegend" ist vorzugsweise auf eine Mittelachse und/oder Symmetrieachse des Rotors bezogen.

So kann beispielsweise eine Innenkühlung des Rotors ausgebildet sein.

Vorteilhaft kann es sein, wenn ein oder mehrere Statorpakete und/oder ein oder mehrere Rotorpakete durch elektromagnetisches Umformen an einem Gehäuse, beispielsweise eines Elektromotors, festgelegt sind und/oder werden.

Insbesondere sind und/oder werden das eine oder die mehreren Statorpakete und/oder das eine oder die mehreren Rotorpakete an das Gehäuse angepresst.

Ergänzend oder alternativ kann auch das Gehäuse selbst durch elektromagnetisches Umformen hergestellt sein.

Es kann vorgesehen sein, dass zwischen dem Gehäuse und dem einen oder den mehreren Rotorpaketen und/oder dem einen oder den mehreren Statorpaketen eine Schicht oder ein Schichtsystem angeordnet ist, welche/welches mindestens ein keramisches Material umfasst oder daraus gebildet ist.

Weitere Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische Darstellung eines Ablaufs eines Verfahrens zur Herstellung eines oder mehrerer Blechstapel, bei welchem drei zu Rollen aufgewickelte Bleche stoffschlüssig miteinander verbunden werden;
- Fig. 2: eine weitere schematische Darstellung des Verfahrens aus Fig. 1;
- Fig. 3: eine schematische Darstellung eines Ausschnitts des Verfahrens aus Fig. 1 und 2;
- Fig. 4: eine schematische Draufsicht auf einen Blechstapel, welcher in einem in den Fig. 1 bis 3 dargestellten Verfahren hergestellt wurde; und
- Fig. 5: eine schematische Draufsicht auf einen Elektromotor, welcher einen Rotor und einen Stator umfasst.

Gleiche oder funktional äquivalente Elemente sind in sämtlichen Figuren mit denselben Bezugszeichen versehen.

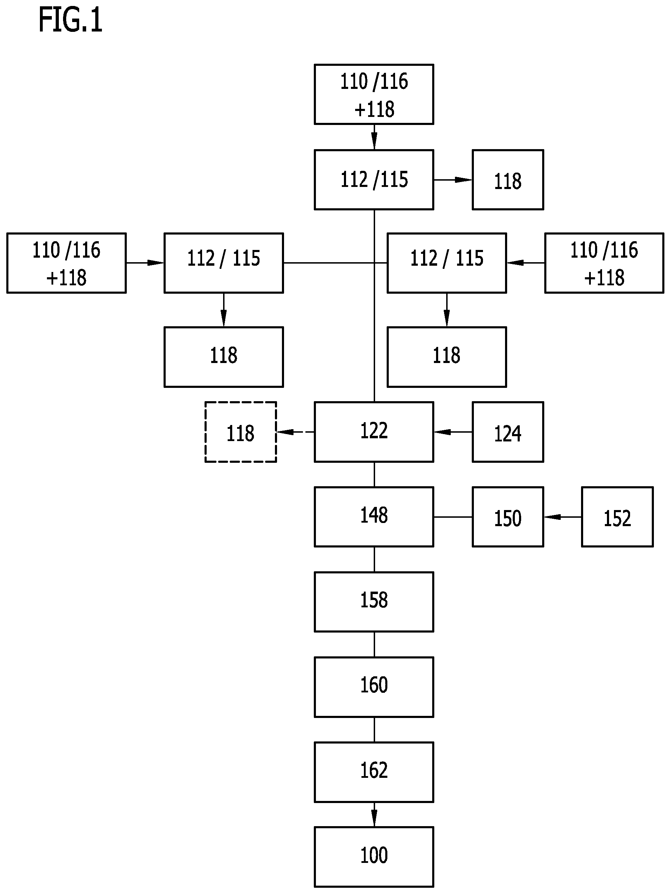

In den Fig. 1 bis 3 ist ein Ablauf eines Verfahrens zur Herstellung eines Blechstapels 100 schematisch gezeigt. Mit dem Verfahren kann eine Serienfertigung von Blechstapeln 100 ausgebildet werden.

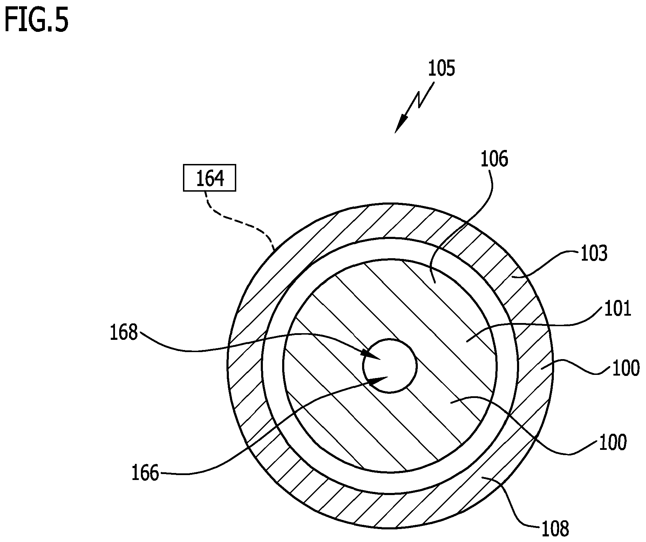

Bei den Blechstapeln 100 handelt es sich vorzugsweise um Elektroblechstapel 102, beispielsweise um Elektroblechpakete 104. Die Elektroblechpakete 104 werden vorzugsweise als Rotorpakete 106 und/oder Statorpakete 108 in Rotoren 101 und/oder Statoren 103 verwendet (in Fig. 5 schematisch dargestellt).

Die Rotoren 101 und/oder Statoren 103 bilden vorzugsweise Maschinenbauteile eines (rein schematisch dargestellten) Elektromotors 105.

Der Elektromotor 105 ist vorzugsweise ein Elektromotor eines Fahrzeugs, beispielsweise eines Kraftfahrzeugs.

In einem ersten Verfahrensschritt wird vorzugsweise ein Verbindungsstoff 110 auf ein oder mehrere Bleche 112 aufgetragen und/oder aufgebracht.

Die Bleche 112 bilden in einem resultierenden Blechstapel 100 beispielsweise Lamellen.

Vorliegend werden drei Bleche 112 jeweils beidseitig mit einer Beschichtung mit dem Verbindungsstoff 110 versehen. Dabei wird insbesondere eine Schicht mit einer im Wesentlichen homogenen Dicke senkrecht zu einer Haupterstreckungsebene des jeweiligen Blechs 112 ausgebildet.

Bei den Blechen 112 handelt es sich vorzugsweise um Bleche 112, welche metallische Materialien umfassen oder daraus gebildet sind.

Vorzugsweise sind die Bleche 112 Elektrobleche 115. Beispielsweise sind die Bleche 112 aus Eisen-Silizium-Legierung(en) hergestellt und/oder durch Kaltwalzen zu einem Flachmaterial verarbeitet.

Günstig kann es sein, wenn Bleche 112 verwendet werden, welche bereits vor der Beschichtung mit dem Verbindungsstoff 110 eine Vorbeschichtung aufweisen. Die Vorbeschichtung ist insbesondere elektrisch isolierend ausgebildet.

Vorzugsweise umfasst die Vorbeschichtung einen oder mehrere der folgenden Stoffe oder ist aus einem oder mehreren der folgenden Stoffe gebildet: Polyvinylbutyral, Polyamid, Polyester, modifiziertes Polyamid, Epoxid.

Die Vorbeschichtung dient insbesondere einer Haftvermittlung des Verbindungsstoffs 110 an den Blechen 112.

Beispielsweise sind die Bleche 112 jeweils beidseitig mit einem sogenannten "Backlack" beschichtet, welcher insbesondere eine mechanische Bearbeitung erleichtern kann. Beispielsweise wird NO20 als Vorbeschichtung verwendet.

Für eine Serienfertigung kann es vorteilhaft sein, wenn die Bleche 112 zu einer Rolle 114 aufgewickelt bereitgestellt werden. Beispielsweise werden die Bleche 112 als Coilmaterial bereitgestellt.

Eine Breite der Rollen 114 und/oder Coils liegt vorzugsweise in einem Bereich von ca. 150 mm bis ca. 200 mm. Die Breite ist insbesondere quer zu einer Aufwicklungsrichtung definiert.

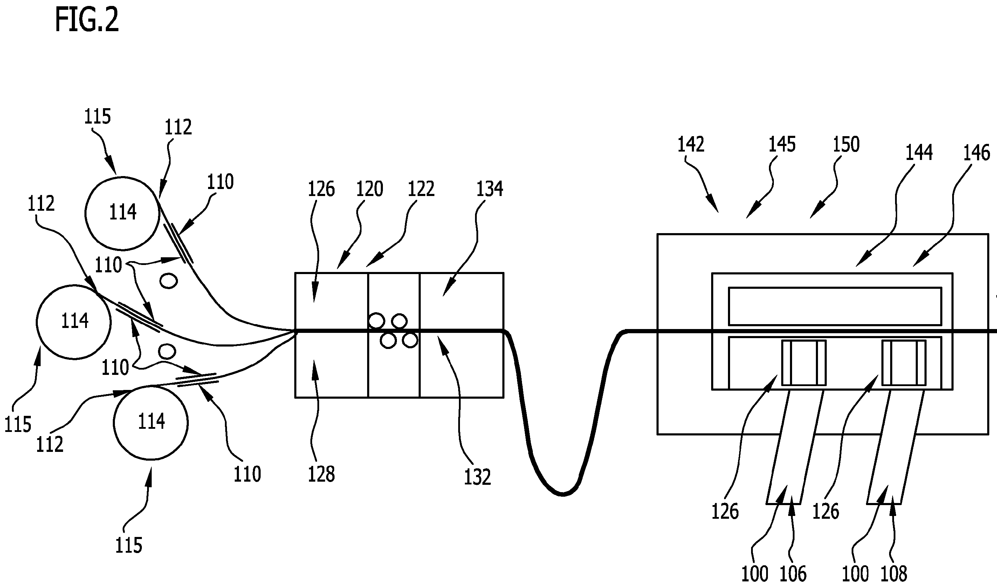

Wie insbesondere in Fig. 2 zu sehen ist, werden die Bleche 112 insbesondere abgewickelt, bevor eine Beschichtung der Bleche 112 mit dem Verbindungsstoff 110 vorgenommen wird. Die Bleche 112 werden vorzugsweise beidseitig mit dem Verbindungsstoff 110 beschichtet.

Die Beschichtung mit dem Verbindungsstoff 110 wird vorzugsweise in einem Inline-Verfahren und/oder kontinuierlich durchgeführt.

Der Verbindungsstoff 110 ist vorzugsweise ein Klebstoff 116 und/oder wirkt wie ein Klebstoff 116. Der Verbindungsstoff 110 dient vorzugsweise dem stoffschlüssigen Verbinden der Bleche 112.

Es kann vorgesehen sein, dass der Verbindungsstoff 110 mit einem Lösungsmittel 118 versetzt auf die Bleche 112 aufgetragen wird, wobei das Lösungsmittel 118 insbesondere derart ausgewählt ist, dass es nach dem Auftragen entweicht.

Hierzu ist das Lösungsmittel 118 beispielsweise derart ausgewählt, dass es einen vergleichsweise hohen Dampfdruck aufweist, so dass es bereits bei Raumtemperatur und Raumdruck (ca. 1 bar) und/oder bei einer ersten Aktivierungstemperatur 124 verdampft.

Es hat sich als vorteilhaft erwiesen, wenn das Lösungsmittel 118 ein oder mehrere mittelflüchtige bis leichtflüchtige organische Lösungsmittel umfasst oder daraus gebildet ist.

Das Lösungsmittel 118 wird vorzugsweise derart ausgewählt, dass sowohl ein Harzmaterial des Verbindungsstoffs 110 als auch ein Elastomermaterial des Verbindungsstoffs darin leicht löslich sind.

Das Lösungsmittel 118 weist eine Verdunstungszahl nach DIN 53170 von 300 oder weniger, insbesondere von ca. 280 oder weniger, beispielsweise von ca. 250 oder weniger, auf.

Das Lösungsmittel 118 weist eine Verdunstungszahl nach DIN 53170 von 7 oder mehr, insbesondere von ca. 8 oder mehr, beispielsweise von ca. 10 oder mehr, auf.

Die Verdunstungszahl ist vorzugsweise ein Verhältnis einer Zeit, in der ein Stoff komplett verdunstet, und einer Zeit, in der Diethylether komplett verdunstet.

Beispielsweise umfasst das Lösungsmittel 118 eine Mischung aus Methoxypropylacetat und Butylacetat oder ist aus dieser Mischung gebildet.

Dabei beträgt ein Anteil an Methoxypropylacetat vorzugsweise ca. 5 Vol.-% oder mehr, insbesondere ca. 50 Vol.-% oder mehr, beispielsweise ca. 75 Vol.-% oder mehr, bezogen auf ein Gesamtvolumen des Lösungsmittels 118.

Alternativ beträgt der Anteil an Methoxypropylacetat an dem Lösungsmittel 118 vorzugsweise ca. 75 Vol.-% oder weniger, insbesondere ca. 50 Vol.-% oder weniger, beispielsweise ca. 5 Vol.-% oder weniger, bezogen auf das Gesamtvolumen des Lösungsmittels 118.

Vorteilhaft kann es sein, wenn ein Anteil des Lösungsmittels 118 an einem Verbindungsstoff-Lösungsmittel-Gemisch ca. 65 Vol.-% oder mehr, insbesondere ca. 70 Vol.-% oder mehr, beträgt.

Vorzugsweise beträgt der Anteil des Lösungsmittels 118 an dem Verbindungsstoff-Lösungsmittel-Gemisch ca. 95 Vol.-% oder weniger, insbesondere ca. 90 Vol.-% oder weniger.

Die Prozentangaben sind dabei vorzugsweise auf ein Gesamtvolumen des resultierenden Verbindungsstoff-Lösungsmittel-Gemischs bezogen.

Vorteilhaft kann es sein, wenn ein Anteil des Lösungsmittels 118 an einem Verbindungsstoff-Lösungsmittel-Gemisch ca. 65 Gew.-% oder mehr, insbesondere ca. 70 Gew.-% oder mehr, beträgt.

Vorzugsweise beträgt der Anteil des Lösungsmittels 118 an dem Verbindungsstoff-Lösungsmittel-Gemisch ca. 95 Gew.-% oder weniger, insbesondere ca. 90 Gew.-% oder weniger.

Die Prozentangaben sind dabei vorzugsweise auf eine Gesamtmasse des resultierenden Verbindungsstoff-Lösungsmittel-Gemischs bezogen.

Vorzugsweise wird der Verbindungsstoff 110 im Wesentlichen vollständig in dem Lösungsmittel 118 gelöst und/oder homogen darin verteilt.

Je nach Viskosität des Verbindungsstoff-Lösungsmittel-Gemischs kann es günstig sein, wenn der Verbindungsstoff 110 mit dem Lösungsmittel 118 zu dem Verbindungsstoff-Lösungsmittel-Gemisch vermischt mittels eines oder mehrerer der folgenden Beschichtungsverfahren auf das eine oder die mehreren Bleche 112 aufgebracht wird: Sprühen, Streichen, Gießen.

Der Verbindungsstoff 110 und/oder das Lösungsmittel 118 werden vorzugsweise derart ausgewählt, dass der Verbindungsstoff allein und/oder das Verbindungsstoff-Lösungsmittel-Gemisch eine Shore-Härte A von ca. 20 oder mehr, insbesondere von ca. 30 oder mehr, aufweist.

Die Shore-Härte A des Verbindungsstoffs 110 allein und/oder die Shore-Härte A des Verbindungsstoff-Lösungsmittel-Gemischs beträgt vorzugsweise ca. 90 oder weniger, insbesondere ca. 80 oder weniger.

Beispielsweise liegt die Shore-Härte A des Verbindungsstoffs 110 nach einer ersten Aktivierung 122 und/oder einer zweiten Aktivierung 150 und/oder noch vor der ersten Aktivierung in dem Verbindungsstoff-Lösungsmittel-Gemisch in einem Bereich von ca. 30 bis ca. 80.

Der Verbindungsstoff 110 ist vorzugsweise derart gewählt, dass er nach der ersten Aktivierung 122 und/oder nach der zweiten Aktivierung 150 elektrisch isolierend ist.

Die genannten mechanischen Eigenschaften liegen vorzugsweise bei einem Verbindungsstoff 110 vor, welcher ein Harzmaterial und ein Elastomermaterial umfasst.

Günstig kann es sein, wenn das Elastomermaterial ein Synthese-Kautschuk-Material umfasst oder daraus gebildet ist. Beispielsweise umfasst das Elastomermaterial einen Acrylnitril-Butadien-Kautschuk und/oder einen Styrol-Butadien-Kautschuk.

Gemäß einer bevorzugten Ausführungsform ist das Elastomermaterial ein Acrylnitril-Butadien-Kautschuk.

Ein Anteil des Elastomermaterials, insbesondere des Acrylnitril-Butadien-Kautschuks, beträgt vorzugsweise ca. 1 Vol.-% oder mehr, insbesondere ca. 5 Vol.-% oder mehr, bezogen auf ein Gesamtvolumen des Verbindungsstoffs 110 oder bezogen auf das Gesamtvolumen des Verbindungsstoff-Lösungsmittel-Gemischs.

Vorzugsweise beträgt der Anteil des Elastomermaterials, insbesondere des Acrylnitril-Butadien-Kautschuks, ca. 25 Vol.-% oder weniger, insbesondere ca. 20 Vol.-% oder weniger, bezogen auf das Gesamtvolumen des Verbindungsstoffs 110 oder bezogen auf das Gesamtvolumen des Verbindungsstoff-Lösungsmittel-Gemischs.

Ein Anteil des Elastomermaterials, insbesondere des Acrylnitril-Butadien-Kautschuks, liegt vorzugsweise bei ca. 1 Gew.-% oder mehr, insbesondere bei ca. 5 Gew.-% oder mehr, bezogen auf eine Gesamtmasse des Verbindungsstoffs 110 oder bezogen auf die Gesamtmasse des Verbindungsstoff-Lösungsmittel-Gemischs.

Vorzugsweise beträgt der Anteil des Elastomermaterials, insbesondere des Acrylnitril-Butadien-Kautschuks, ca. 25 Gew.-% oder weniger, insbesondere ca. 20 Gew.-% oder weniger, bezogen auf die Gesamtmasse des Verbindungsstoffs 110 oder bezogen auf die Gesamtmasse des Verbindungsstoff-Lösungsmittel-Gemischs.

Durch den Anteil des Elastomermaterials ist der Verbindungsstoff 110 vorzugsweise derart ausgebildet, dass Mikrobewegungen von ihm aufnehmbar und/oder absorbierbar sind.

Für die zweite Aktivierung 150 bei einer im Vergleich zu einer ersten Temperatur 124 bei der ersten Aktivierung 122 erhöhten zweiten Temperatur 152 kann es vorteilhaft sein, wenn der Verbindungsstoff 110 ein Harzmaterial umfasst.

Vorzugsweise liegt ein Anteil des Harzmaterials an dem Verbindungsstoff 110 bei ca. 1 Vol.-% oder mehr, insbesondere bei ca. 2 Vol.-% oder mehr, bezogen auf das Gesamtvolumen des Verbindungsstoffs 110 oder bezogen auf das Gesamtvolumen des Verbindungsstoff-Lösungsmittel-Gemischs.

Vorzugsweise beträgt der Anteil des Harzmaterials an dem Verbindungsstoff 110 ca. 15 Vol.-% oder weniger, insbesondere ca. 10 Vol.-% oder weniger, bezogen auf das Gesamtvolumen des Verbindungsstoffs 110 oder bezogen auf das Gesamtvolumen des Verbindungsstoff-Lösungsmittel-Gemischs.

Vorzugsweise beträgt ein Anteil des Harzmaterials an dem Verbindungsstoff 110 ca. 1 Gew.-% oder mehr, insbesondere ca. 2 Gew.-% oder mehr, bezogen auf die Gesamtmasse des Verbindungsstoffs 110 oder bezogen auf die Gesamtmasse des Verbindungsstoff-Lösungsmittel-Gemischs.

Vorzugsweise beträgt der Anteil des Harzmaterials an dem Verbindungsstoff 110 ca. 15 Gew.-% oder weniger, insbesondere ca. 10 Gew.-% oder weniger, bezogen auf die Gesamtmasse des Verbindungsstoffs 110 oder bezogen auf die Gesamtmasse des Verbindungsstoff-Lösungsmittel-Gemischs.

Als besonders bevorzugte Harzmaterialien haben sich ein Epoxyharzmaterial und/oder ein duroplastisches Polymermaterial erwiesen.

Günstig kann es sein, wenn der Verbindungsstoff 110 als Harzmaterial ein Phenolharz-Polymermaterial, insbesondere einen Novolak, umfasst oder daraus gebildet ist.

Novolake sind vorzugsweise Phenolharze mit einem Formaldehyd-Phenolverhältnis von kleiner als 1:1.

Für eine verbesserte Haftung des Verbindungsstoffs 110 an den Blechen 112 kann es vorteilhaft sein, wenn der Verbindungsstoff 110 einen Haftvermittler umfasst.

Der Haftvermittler umfasst vorzugsweise ein organisch funktionalisiertes Silan, insbesondere ein Aminosilan, oder ist aus einem organisch funktionalisierten Silan, insbesondere einem Aminosilan, gebildet.

Alternativ oder ergänzend zu Aminosilanen können auch Epoxysilane als organisch funktionalisierte Silane verwendet werden.

Vorteilhaft kann es sein, wenn ein Anteil des Haftvermittlers ca. 0,5 Vol.-% oder mehr, insbesondere ca. 1 Vol.-% oder mehr, bezogen auf das Gesamtvolumen des Verbindungsstoffs 110 oder bezogen auf das Gesamtvolumen des Verbindungsstoff-Lösungsmittel-Gemischs, beträgt.

Vorzugsweise beträgt der Anteil des Haftvermittlers ca. 6 Vol.-% oder weniger, insbesondere ca. 5 Vol.-% oder weniger, bezogen auf das Gesamtvolumen des Verbindungsstoffs 110 oder bezogen auf das Gesamtvolumen des Verbindungsstoff-Lösungsmittel-Gemischs.

Vorteilhaft kann es sein, wenn der Anteil des Haftvermittlers ca. 0,5 Gew.-% oder mehr, insbesondere ca. 1 Gew.-% oder mehr, bezogen auf die Gesamtmasse des Verbindungsstoffs 110 oder bezogen auf die Gesamtmasse des Verbindungsstoff-Lösungsmittel-Gemischs, beträgt.

Vorzugsweise beträgt der Anteil des Haftvermittlers ca. 6 Gew.-% oder weniger, insbesondere ca. 5 Gew.-% oder weniger, bezogen auf die Gesamtmasse des Verbindungsstoffs 110 oder bezogen auf die Gesamtmasse des Verbindungsstoff-Lösungsmittel-Gemischs.

Ein E-Modul des Verbindungsstoffs 110 und/oder ein E-Modul des Verbindungsstoff-Lösungsmittel-Gemischs liegt vorzugsweise bei ca. 100 N/mm² oder mehr, insbesondere bei ca. 300 N/mm² oder mehr.

Vorzugsweise beträgt der E-Modul des Verbindungsstoffs 110 und/oder des Verbindungsstoff-Lösungsmittel-Gemischs ca. 1000 N/mm² oder weniger, insbesondere ca. 800 N/mm² oder weniger.

Eine besonders bevorzugte Zusammensetzung des Verbindungsstoff-Lösungsmittel-Gemischs besteht im Wesentlichen aus einer Mischung aus Acrylnitril-Butadien-Kautschuk, Novolak, Aminosilan und als Lösungsmittel einer Mischung aus Methoxypropylacetat und Butylacetat.

Nach dem Beschichten der Bleche 112 mit dem Verbindungsstoff 110 werden die Bleche 112 vorzugsweise zusammengeführt und/oder übereinander angeordnet, so dass insbesondere Haupterstreckungsebenen der Bleche 112 zumindest näherungsweise parallel zueinander angeordnet sind.

Insbesondere durch den Anteil an Elastomermaterial in dem Verbindungsstoff 110 weist der Blechstapel 100 vorzugsweise eine Fluiddichtigkeit längs quer zu den Haupterstreckungsebenen der Bleche 112 verlaufender Richtungen auf. So ist der Blechstapel 100 insbesondere querdicht.

Beispielsweise ist der Blechstapel 100 längs einer Hauptströmungsrichtung eines Kühlmediums, beispielsweise Kühlwasser, fluiddicht (Öffnungen zur Kühlmediumführung ausgenommen).

Der Verbindungsstoff 110 kann insbesondere beschädigungsfrei Mikrobewegungen aufnehmen und/oder absorbieren. Insbesondere ist der Blechstapel 100 über die gesamte Lebensdauer des Elektromotors 105 fluiddicht.

In Ausführungsformen, in welchen die Bleche 112 Elektrobleche 115 sind, kann es vorteilhaft sein, wenn die Elektrobleche 115 vorzugsweise derart übereinander angeordnet werden, dass eine Hauptkornorientierungsrichtung unterschiedlicher Elektrobleche 115 längs einer Stapelrichtung variiert.

Beispielsweise schließen Hauptkornorientierungsrichtungen von in Stapelrichtung übereinander angeordneten Elektroblechen 115 einen Winkel von ca. 30° oder mehr, insbesondere von ca. 50° oder mehr, miteinander ein.

Hauptkornorientierungsrichtungen von in Stapelrichtung übereinander angeordneten Elektroblechen 115 schließen insbesondere einen Winkel von ca. 120° oder weniger, insbesondere von ca. 100° oder weniger, miteinander ein.

Beispielsweise werden in Stapelrichtung übereinander angeordnete Elektrobleche 115 bezüglich ihren Hauptkornorientierungsrichtungen abwechselnd längs und quer angeordnet. So kann ein Pressenraum, in welchem die Elektrobleche vorzugsweise nach der Beschichtung zusammengepresst und/oder aneinandergedrückt werden, optimal ausgenutzt werden.

Eine Dicke der Beschichtung mit dem Verbindungsstoff 110 wird vorzugsweise derart gewählt, dass ein Verhältnis von Dicke der Bleche 112 senkrecht zu deren Haupterstreckungsebene und einer Schichtdicke des Verbindungsstoffs 110 senkrecht zu der Haupterstreckungsebene der Bleche 112 nach und/oder vor dem Entweichen des Lösungsmittels 118 bei ca. 20:1 oder mehr, insbesondere bei ca. 25:1 oder mehr, liegt.

Das Verhältnis der Dicke der Bleche 112 und der Schichtdicke des Verbindungsstoffs 110 liegt vorzugsweise bei ca. 250:1 oder weniger, insbesondere bei ca. 220:1 oder weniger.

Beispielsweise liegt ein Verhältnis der Dicke eines Blechs 112 zu der Schichtdicke einer Schicht des Verbindungsstoffs 110 in einem Bereich von ca. 200:1 und ca. 28,55:1.

Vorteilhaft kann es sein, wenn die Dicke der Bleche 112 jeweils ca. 0,2 mm beträgt und eine Schichtdicke des Verbindungsstoffs 110 jeweils ca. 1 µm oder ca. 7 µm beträgt.

Beispielsweise werden Bleche 112 mit einer Dicke senkrecht zu deren Haupterstreckungsebene von vorzugsweise 0,5 mm oder weniger, insbesondere ca. 0,3 mm oder weniger, verwendet.

Die Dicke der Bleche 112 beträgt vorzugsweise ca. 0,05 mm oder mehr, insbesondere ca. 0,15 mm oder mehr.

Vorzugsweise beträgt die Schichtdicke des Verbindungsstoffs 110 nach dem Auftragen und/oder nach der ersten Aktivierung 122 ca. 1 µm oder mehr, insbesondere ca. 3 µm oder mehr, beispielsweise ca. 5 µm oder mehr.

Die Schichtdicke des Verbindungsstoffs 110 beträgt nach dem Auftragen und/oder nach der ersten Aktivierung 122 vorzugsweise ca. 9 µm oder weniger, insbesondere ca. 8 µm oder weniger, beispielsweise ca. 7 µm oder weniger.

Beispielsweise beträgt die Schichtdicke des Verbindungsstoffs 110 im Durchschnitt ca. 6 µm auf einer Seite des jeweiligen Blechs 112 und/oder zusammengenommen auf beiden Seiten des jeweiligen Blechs 112.

Vorzugsweise sind die Blechlaminateinheiten 140 und/oder Bleche 112 ohne sogenannte "Interlocks" ausgebildet. Die "Interlocks" sind insbesondere an senkrecht und/oder parallel zu einer Haupterstreckungsebene eines Blechs 112 angeordnet.

Insbesondere weisen die Bleche 112 und/oder die Blechlaminateinheiten 140 keine Vorsprünge und/oder Rücksprünge auf, insbesondere senkrecht und/oder parallel zu einer jeweiligen Haupterstreckungsebene. Ausgenommen hiervon sind insbesondere Öffnungen und/oder Ausnehmungen in den Blechen 112 zur Ausbildung einer Rotorform und/oder Statorform.

Günstig kann es sein, wenn eine lokale Dickenvariation der Bleche 112 und/oder Blechlaminateinheiten 140 ca. 5 % oder weniger, insbesondere ca. 2 % oder weniger, bezogen auf eine durchschnittliche Dicke des jeweiligen Blechs 112 und/oder der jeweiligen Blechlaminateinheit 140 beträgt.

Die lokale Dickenvariation ist vorzugsweise unabhängig von Öffnungen und/oder Ausnehmungen in den Blechen 112 und/oder Blechlaminateinheiten 140.

Beispielsweise sind die Bleche 112 und/oder Blechlaminateinheiten 140 und/oder Blechlaminate 132 eben ausgebildet.

Die mit dem Verbindungsstoff 110, insbesondere beidseitig, beschichteten Bleche 112 werden vorzugsweise derart übereinander angeordnet und/oder gestapelt, dass zwischen dem in Stapelrichtung mittleren Blech 112 und den beiden äußeren Blechen 112 jeweils zwei Schichten des Verbindungsstoffs 110 unmittelbar aneinander angrenzen und/oder miteinander verbunden sind.

Günstig kann es sein, wenn die übereinander angeordneten mit dem Verbindungsstoff 110 beschichteten Bleche 112 einem Reaktionsraum 120 zugeführt werden, in welchem die erste Aktivierung 122 des Verbindungsstoffs 110 durchgeführt wird.

Die erste Aktivierung 122 erfolgt vorzugsweise inline und/oder während die Bleche 112 durch den Reaktionsraum 120 hindurchgeführt werden.

Günstig kann es sein, wenn die erste Aktivierung 122 eine thermische Aktivierung ist, bei welcher der Verbindungsstoff 110 und/oder die Bleche 112 auf eine erste Temperatur 124 erwärmt werden.

Beispielsweise werden die übereinander angeordneten mit dem Verbindungsstoff 110 beschichteten Bleche 112 durch eine Heizeinrichtung 126 hindurchgeführt. Durch die Heizeinrichtung erfolgt vorzugsweise eine Erwärmung des Verbindungsstoffs 110 und/oder der Bleche 112 auf die erste Temperatur 124.

Als Heizeinrichtung 126 eignet sich insbesondere eine Infrarot-Heizeinrichtung 128, beispielsweise ein Infrarot-Strahler.

Alternativ oder ergänzend können auch Widerstandsheizeinrichtungen und/oder Induktionsheizeinrichtungen zum Erwärmen des Verbindungsstoffs 110 und/oder der Bleche 112 verwendet werden.

Die erste Aktivierung 122 wird vorzugsweise bei einer Temperatur von 50°C oder mehr, insbesondere von 55°C oder mehr, durchgeführt.

Die erste Temperatur 124 bei der ersten Aktivierung 122 beträgt vorzugsweise ca. 90°C oder weniger, insbesondere ca. 85°C oder weniger.

Bei der ersten Aktivierung 122 findet vorzugsweise eine Verklebung zwischen aneinander angrenzenden Schichten des Verbindungsstoffs 110 statt. Die Verklebung beruht insbesondere überwiegend auf Adhäsionskräften.

Diese erste Aktivierung 122 bei der ersten Temperatur 124 führt vorzugsweise zu einem stoffschlüssigen Verbinden der Schichten des Verbindungsstoffs 110 zwischen den Blechen 112. Die Verbindung erfolgt insbesondere aufgrund einer chemischen und/oder physikalischen Reaktion eines Elastomermaterials des Verbindungsstoffs 110.

Bei der ersten Aktivierung 122 kann es vorteilhaft sein, wenn die erwärmten mit dem Verbindungsstoff 110 beschichteten Bleche 112 zusammengepresst und/oder zusammengedrückt werden.

Das Zusammenpressen und/oder Zusammendrücken kann beispielsweise über eine Führung der Bleche 112 zwischen Rollen erfolgen (vgl. Fig. 2). Die Rollen erzeugen hierbei insbesondere einen zumindest näherungsweise konstanten Anpressdruck zwischen den einzelnen Blechen 112.

Durch die erste Aktivierung 122 entsteht vorzugsweise ein Blechlaminat 132, welches die - vorliegend drei - Bleche 112 umfasst, die stoffschlüssig mittels des Verbindungsstoffs 110 miteinander verbunden sind.

Alternativ oder ergänzend zu einer thermischen Aktivierung kann die erste Aktivierung 122 auch eine Aktivierung durch Druck und/oder eine chemische Aktivierung sein.

Bei einer Aktivierung durch Druck kann vorgesehen sein, dass der Reaktionsraum 120, in welchem die erste Aktivierung 122 durchgeführt wird, mit einem Überdruck oder einem Unterdruck beaufschlagt wird.

Ergänzend oder alternativ können die zu verbindenden Bleche 112 zusammengepresst werden, beispielsweise wie zuvor beschrieben.

Bei einer chemischen Aktivierung wird der Verbindungsstoff 110 vorzugsweise mit einem Reaktionsstartstoff in Kontakt gebracht und/oder es wird ein Reaktionsstartstoff zum Zeitpunkt der ersten Aktivierung 122 hinzugesetzt.

Ein Reaktionsstartstoff ist beispielsweise ein Vernetzungsmittel und/oder ein Radikalstarter.

Durch die erste Aktivierung 122 findet vorzugsweise eine Vorkonsolidierung statt.

Nach dem stoffschlüssigen Verbinden der Bleche 112 zu dem Blechlaminat 132 wird das Blechlaminat 132 vorzugsweise durch eine Kühleinrichtung 134 hindurchgeführt.

Die Kühleinrichtung 134 kann als aktiver Kühlkanal ausgebildet sein, welcher einer Trocknung und/oder Abkühlung des Blechlaminats 132 auf Raumtemperatur (ca. 20°C) dient.

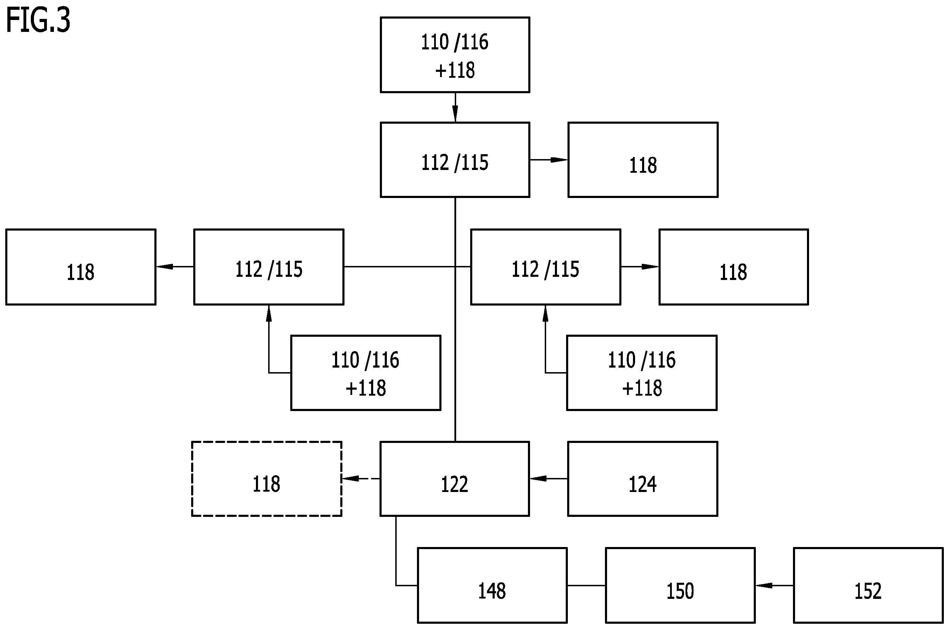

Bei der Trocknung verdampft verbliebenes Lösungsmittel 118 vorzugsweise im Wesentlichen vollständig (in den Fig. 1 und 3 durch gestrichelte Linien angedeutet).

Es kann vorgesehen sein, dass das Blechlaminat 132, insbesondere nach dem Durchführen durch die Kühleinrichtung 134, aufgewickelt wird.

Vor einem auf die Herstellung des Blechlaminats 132 folgenden Verfahrensschritt wird das Blechlaminat 132 im Falle einer Aufwicklung vorzugsweise wieder abgewickelt.

Nach der Herstellung des Blechlaminats 132 wird das Blechlaminat 132 vorzugsweise zum Herstellen mehrerer Blechlaminateinheiten 140 zerteilt und/oder werden mehrere Blechlaminateinheiten 140 aus dem Blechlaminat 132 herausgetrennt.

Hierzu wird das Blechlaminat 132 vorzugsweise einem Werkzeug 142 zugeführt, welches ein Stanzwerkzeug 144 umfasst.

Das Stanzwerkzeug 144 umfasst vorzugsweise zwei Werkzeughälften, welche jeweils mit einem oder mehreren Messerelementen ausgestattet sind (nicht gezeigt). Durch Zusammenpressen der zwei Werkzeughälften des Stanzwerkzeugs 144 wird vorzugsweise mit den Messerelementen eine vorbestimmte Form aus dem Blechlaminat 132 herausgetrennt und/oder herausgeschnitten.

Für einen minimierten Kanteneinzug kann es vorteilhaft sein, wenn das Blechlaminat 132, insbesondere vor dem Stanzen, vorgewärmt wird.

Beispielsweise wird ein Bereich des Blechlaminats 132, in welchem ein oder mehrere Messerelemente des Stanzwerkzeugs 144 schneiden, vorgewärmt. Dieser Bereich ist beispielsweise ein Schnittkantenareal.

Das Vorwärmen erfolgt vorzugsweise mittels eines Lasers.

Für eine optimierte Verfahrensführung kann es günstig sein, wenn das Stanzwerkzeug 144 in ein Presswerkzeug 145, beispielsweise eine Presse, integriert ist.

Das Presswerkzeug 145 dient vorzugsweise einem Aneinanderpressen und/oder Aneinanderdrücken mehrerer Blechlaminateinheiten 140 während einer zweiten Aktivierung 150 des Verbindungsstoffs 110.

Vorzugsweise wird ein Feinstanzwerkzeug 146 als Stanzwerkzeug 144 verwendet. Beispielsweise wird eine Feinstanzeinheit der Firma Webo Werkzeugbau Oberschwaben GmbH in eine konventionelle Presse integriert.

Das Stanzen ist in den Fig. 1 und 3 schematisch mit dem Bezugszeichen 148 angedeutet.

Es kann vorgesehen sein, dass durch das Stanzen 148 eine vollständige Zerteilung des Blechlaminats 132 erfolgt oder dass durch das Stanzwerkzeug 144 zunächst eine Materialschwächung herbeigeführt wird und das Blechlaminat 132 anschließend und/oder währenddessen durch einen elektromagnetischen Impuls vollständig zerteilt wird.

Der elektromagnetische Impuls wird beispielsweise durch einen elektromagnetischen Impulsgenerator erzeugt. Gemäß dieser Variante des Verfahrens wird das Blechlaminat 132 elektromagnetisch umgeformt.

Günstig kann es sein, wenn das Stanzwerkzeug 144 einen Hub pro Stack von ca. 200 bis ca. 350, insbesondere von ca. 250 bis ca. 300, beispielsweise von ca. 275 aufweist. Ein "Stack" bezeichnet dabei insbesondere eine Dicke eines Blechlaminats 132 und/oder eine Höhe eines Stapels aus Blechlaminateinheiten 140 und/oder eine Dicke des Blechstapels 100.

Die Dicke des Blechlaminats 132 ist vorzugsweise senkrecht zu dessen Haupterstreckungsebene definiert.

Die Höhe des Stapels aus Blechlaminateinheiten 140 ist vorzugsweise parallel zu der Stapelrichtung definiert.

Die Dicke des Blechstapels 100 ist vorzugsweise senkrecht zu einer Haupterstreckungsebene eines Blechs 112 definiert.

Es kann vorgesehen sein, dass in dem Werkzeug 142 vor, während und/oder nach der zweiten Aktivierung 150 ein Durchsetzfügen der Blechlaminateinheiten 140 vorgenommen wird. Beispielsweise werden die Blechlaminateinheiten 140 geclincht.

Ergänzend oder alternativ werden Blechstapel 100 geclincht.

Vorzugsweise wird unmittelbar nach dem Zerteilen und/oder Heraustrennen der Blechlaminateinheiten 140 eine Stapelung mehrerer Blechlaminateinheiten 140 vorgenommen.

Nach dem Stapeln werden die Blechlaminateinheiten 140 vorzugsweise stoffschlüssig miteinander verbunden.

Günstig kann es sein, wenn das stoffschlüssige Verbinden mehrerer Blechlaminateinheiten 140 noch in dem Werkzeug 142, insbesondere dem Presswerkzeug 145, erfolgt.

Zum stoffschlüssigen Verbinden mehrerer Blechlaminateinheiten 140 werden die Blechlaminateinheiten 140 vorzugsweise übereinandergestapelt, so dass Haupterstreckungsebenen der Bleche 112 der Blechlaminateinheiten 140 im Wesentlichen parallel zueinander angeordnet sind.

Wie bereits im Zusammenhang mit einem übereinander Anordnen und/oder Stapeln der Bleche 112 vor der ersten Aktivierung 122 beschrieben, kann vorgesehen sein, dass Elektrobleche 115 umfassende Blechlaminateinheiten 140 derart angeordnet werden, dass deren Hauptkornorientierungsrichtungen versetzt zueinander und/oder nicht parallel und/oder windschief angeordnet sind.

Das stoffschlüssige Verbinden der Blechlaminateinheiten 140 erfolgt vorzugsweise durch die zweite Aktivierung 150 des Verbindungsstoffs 110. Die zweite Aktivierung 150 ist vorzugsweise eine thermische Aktivierung bei einer zweiten Temperatur 152, welche insbesondere um ca. 30°C oder mehr, beispielsweise um ca. 50°C oder mehr, größer ist als die erste Temperatur 124 bei der ersten Aktivierung 122.

Bei der zweiten Aktivierung 150 werden die Stapel aus Blechlaminateinheiten 140 vorzugsweise durch eine oder mehrere Heizeinrichtungen 126 erwärmt.

Beispielsweise wird der Verbindungsstoff 110 auf eine Temperatur von ca. 120°C oder mehr, insbesondere von ca. 130°C oder mehr, erwärmt.

Bei der zweiten Aktivierung 150 erfolgt insbesondere eine Verklebung aufgrund von Kohäsionskräften zwischen an Außenseiten der Blechlaminateinheiten 140 angeordneten Schichten des Verbindungsstoffs 110.

Vorzugsweise findet bei der zweiten Aktivierung 150 eine Vernetzungsreaktion eines harzbasierten Anteils des Verbindungsstoffs 110 statt. Die zweite Aktivierung 150 wird umgangssprachlich auch als "Verbacken" bezeichnet.

Ergänzend oder alternativ zu einer thermischen Aktivierung kann vorgesehen sein, dass die zweite Aktivierung 150 eine Aktivierung durch Druck und/oder eine chemische Aktivierung ist. Bezüglich der Aktivierung durch Druck und der chemischen Aktivierung wird auf die Ausführungen im Zusammenhang mit der ersten Aktivierung 122 Bezug genommen.

Durch das stoffschlüssige Verbinden mehrerer Blechlaminateinheiten 140 resultieren vorliegend Blechstapel 100.

Für eine effiziente Weiterverarbeitung kann es günstig sein, wenn die Blechstapel 100, insbesondere nachdem sie aus dem Werkzeug 142 entfernt wurden, gestapelt werden und in Behältern, beispielsweise Kleinladungsträgern, gelagert und/oder weitertransportiert werden.

Das Stapeln der Blechstapel 100 ist in Fig. 1 schematisch mit dem Bezugszeichen 158 angedeutet.

Günstig kann es sein, wenn eine Kennzeichnung der Blechstapel 100 vorgenommen wird (mit Bezugszeichen 160 bezeichnet). Zur Kennzeichnung 160 werden beispielsweise Data Matrix Codes verwendet. Die Kennzeichnung 160 erfolgt beispielsweise durch eine Laserbeschriftung.

Ergänzend oder alternativ kann vorgesehen sein, dass bereits Blechlaminateinheiten 140 gekennzeichnet werden.

Es kann vorgesehen sein, dass eine Kennzeichnung 160 pro drei Stapel von Blechstapeln 100 vorgenommen wird.

Vor einer Auslieferung der hergestellten Blechstapel 100 erfolgt vorzugsweise eine Qualitätskontrolle 162.

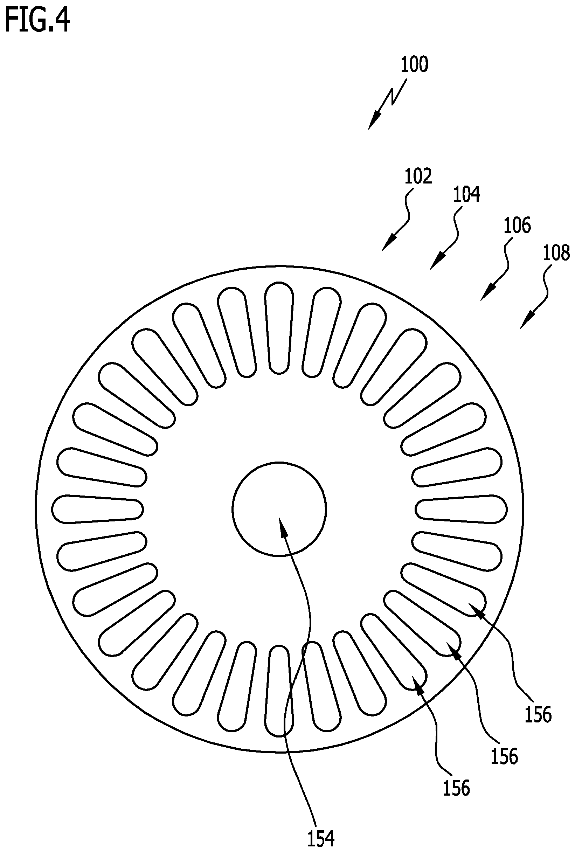

In Fig. 4 ist ein Blechstapel 100 in einer Draufsicht dargestellt.

Der Blechstapel 100 weist vorzugsweise in der Draufsicht eine im Wesentlichen runde Form auf und/oder umfasst eine zentral angeordnete Öffnung 154.

Günstig kann es sein, wenn der Blechstapel 100 ringförmig angeordnete Ausnehmungen 156 in Form von Durchtrittsöffnungen aufweist.

Vorteilhaft kann es sein, wenn jedes Blechlaminat 132 im Wesentlichen dieselbe Form aufweist. Die Öffnungen 154 und/oder Ausnehmungen 156 sämtlicher Blechlaminateinheiten 140 eines Blechstapels 100 sind vorzugsweise in dem Blechstapel 100 im Wesentlichen deckungsgleich angeordnet.

Zur Herstellung eines Elektromotors 105 kann es günstig sein, wenn ein (zeichnerisch nicht dargestelltes) Gehäuse des Elektromotors 105 mittels elektromagnetischen Umformens an ein oder mehrere Rotorpakete 106 und/oder ein oder mehrere Statorpakete 108 angepresst wird.

So kann ein nahezu hydrostatisches Anlegen des einen oder der mehreren Rotorpakete 106 und/oder des einen oder der mehreren Statorpakete 108 an das Gehäuse erfolgen.

Durch hydrostatische Umformung des Gehäuses können mittels Blechumformens hergestellte Teile einen Teil des Gehäuses bilden oder das Gehäuse vollständig aus einem Blechmaterial gefertigt sein und/oder werden.

Das Gehäuse kann ein rolliertes und/oder an Stoßenden gefügtes, beispielsweise geschweißtes, Halbzeug sein. Bevorzugte Halbzeuge sind Rohre.

So können Materialkosten und/oder Werkzeugkosten gespart werden. Ferner können Gehäuse mit einem konstanten Materialdickenverlauf hergestellt werden.

Durch einen gleichmäßigen Kontakt zwischen dem Gehäuse und dem einen oder den mehreren Rotorpaketen 106 und/oder dem einen oder den mehreren Statorpaketen 108 und/oder eine verbesserte elektrische Isolation kann eine Effizienz des Elektromotors gesteigert sein und/oder werden.

Vorzugsweise ist zwischen dem Gehäuse und dem einen oder den mehreren Rotorpaketen 106 und/oder dem einen oder den mehreren Statorpaketen 108 eine Schicht oder ein Schichtsystem angeordnet, welche/welches mindestens ein keramisches Material umfasst oder daraus gebildet ist.

Die Schicht und/oder das Schichtsystem ist vorzugsweise thermisch leitend und/oder elektrisch isolierend.

Insbesondere aufgrund der Fluiddichtigkeit des Blechstapels 100 kann ein Elektromotor 105 ausgebildet werden, welcher eine (rein schematisch angedeutete) Kühlvorrichtung 164 umfasst, die derart ausgebildet ist, dass ein Rotor 101 von innen gekühlt ist und/oder wird (vgl. Fig. 5).

Der Rotor 101 wird vorzugsweise durch ein Kühlmediumführungselement 166 der Kühlvorrichtung 164 an einer dem Stator 103 abgewandten Seite gekühlt, wobei insbesondere ein direkter thermischer Kontakt zwischen einem Kühlmedium der Kühlvorrichtung 164 und dem Rotor 101 besteht.

Beispielsweise weist die Kühlvorrichtung 164 ein Kühlmediumführungselement 166 auf, welches in einem bezüglich einer Mittelachse des Rotors 101 radial innenliegenden Innenraum 168 des Rotors 101 angeordnet ist und/oder den radial innenliegenden Innenraum 168 umgibt.

Günstig kann es sein, wenn der Stator 103 des Elektromotors 105 an einer dem Rotor 101 abgewandten Seite, insbesondere durch eine Kühlmediumführung der Kühlvorrichtung 164, (vorliegend von außen) gekühlt wird.

Vorzugsweise ist die Kühlmediumführung nach innen durch den Stator 103 begrenzt, insbesondere derart, dass das Kühlmedium direkt an dem Stator 103 entlanggeführt ist und/oder wird.

Beispielsweise ist der Stator 103 mittels der Kühlvorrichtung 164 von außen direkt mit Kühlmedium anströmbar und/oder wird angeströmt.

Ein Statorträger ist vorzugsweise entbehrlich.

In dem zuvor beschriebenen Verfahren zur Herstellung eines Blechstapels 100 wird vorzugsweise durch die Verwendung eines Verbindungsstoffs, welcher ein Elastomermaterial und ein Harzmaterial umfasst, eine Verklebung auf zwei Temperaturniveaus erreicht, so dass insbesondere eine zweistufige Verklebung mit nur einem Verbindungsstoff 110 durchgeführt werden kann.

Eine in einer ersten Stufe erzielte stoffschlüssige Verbindungswirkung des Verbindungsstoffs 110 zwischen den Blechen 112 bleibt während der zweiten Aktivierung 150, in welcher mehrere Blechlaminateinheiten 140 stoffschlüssig miteinander verbunden wurden, vorzugsweise erhalten.

## Patentansprüche

1. Verfahren zur Herstellung eines Blechstapels (100), insbesondere eines Elektroblechpakets (104), wobei das Verfahren Folgendes umfasst:
- Beschichten eines oder mehrerer Bleche (112) mit einem Verbindungsstoff (110);
- Verbinden mehrerer Bleche (112) zu einem Blechlaminat (132) durch eine erste Aktivierung (122) des Verbindungsstoffs (110);
- Zerteilen des Blechlaminats (132) zum Herstellen mehrerer Blechlaminateinheiten (140) und/oder Herausteilen mehrerer Blechlaminateinheiten (140) aus dem Blechlaminat (132); und
- Verbinden der mehreren Blechlaminateinheiten (140) zu einem Blechstapel (100) durch eine zweite Aktivierung (150) des Verbindungsstoffs (110),
wobei der Verbindungsstoff (110) ein Harzmaterial und ein Elastomermaterial umfasst und der Verbindungsstoff (110) vor der Beschichtung des einen oder der mehreren Bleche (112) mit einem Lösungsmittel (118) versetzt wird, wobei das Lösungsmittel (118) eine Verdunstungszahl nach DIN 53170 von 7 bis 300 aufweist.

2. Verfahren nach Anspruch 1, **dadurch gekennzeichnet, dass** ein Anteil des Elastomermaterials in einem Bereich von ca. 1 Vol.-% bis ca. 25 Vol.-%, insbesondere von ca. 5 Vol.-% bis ca. 20 Vol.-%, bezogen auf ein Gesamtvolumen des Verbindungsstoffs (110) oder bezogen auf ein Gesamtvolumen eines Verbindungsstoff-Lösungsmittel-Gemischs, liegt, wobei unter dem Verbindungsstoff-Lösungsmittel-Gemisch ein Stoffgemisch aus dem Verbindungsstoff (110) und dem Lösungsmittel (118) verstanden wird.

3. Verfahren nach Anspruch 1 oder 2, **dadurch gekennzeichnet, dass** das Elastomermaterial ein Synthese-Kautschukmaterial, insbesondere einen Acrylnitril-Butadien-Kautschuk, umfasst oder daraus gebildet ist.

4. Verfahren nach einem der Ansprüche 1 bis 3, **dadurch gekennzeichnet, dass** eine Shore-Härte A des Verbindungsstoffs (110) und/oder eine Shore-Härte A eines Verbindungsstoff-Lösungsmittel-Gemischs in einem Bereich von ca. 20 bis ca. 90, insbesondere von ca. 30 bis ca. 80, liegt, wobei unter dem Verbindungsstoff-Lösungsmittel-Gemisch ein Stoffgemisch aus dem Verbindungsstoff (110) und dem Lösungsmittel (118) verstanden wird.

5. Verfahren nach einem der Ansprüche 1 bis 4, **dadurch gekennzeichnet, dass** der Verbindungsstoff (110), insbesondere nach der ersten Aktivierung (122) und/oder der zweiten Aktivierung (150), elektrisch isolierend ist.

6. Verfahren nach einem der Ansprüche 1 bis 5, **dadurch gekennzeichnet, dass** das Harzmaterial ein Epoxyharzmaterial und/oder ein duroplastisches Polymermaterial, insbesondere ein Phenolharz-Polymermaterial, insbesondere einen Novolak, umfasst oder daraus gebildet ist.

7. Verfahren nach einem der Ansprüche 1 bis 6, **dadurch gekennzeichnet, dass** ein Anteil des Harzmaterials an dem Verbindungsstoff (110) in einem Bereich von ca. 1 Vol.-% bis ca. 15 Vol.-%, insbesondere von ca. 2 Vol.-% bis ca. 10 Vol.-%, bezogen auf ein Gesamtvolumen des Verbindungsstoffs (110) oder auf ein Gesamtvolumen eines Verbindungsstoff-Lösungsmittel-Gemischs, liegt, wobei unter dem Verbindungsstoff-Lösungsmittel-Gemisch ein Stoffgemisch aus dem Verbindungsstoff (110) und dem Lösungsmittel (118) verstanden wird.

8. Verfahren nach einem der Ansprüche 1 bis 7, **dadurch gekennzeichnet, dass** der Verbindungsstoff (110) vor der Beschichtung des einen oder der mehreren Bleche (112) mit einem Lösungsmittel (118) versetzt wird, wobei ein Anteil des Lösungsmittels (118) in einem Bereich von ca. 65 Vol.-% bis ca. 95 Vol.-%, insbesondere von ca. 70 Vol.-% bis ca. 90 Vol.-%, bezogen auf ein Gesamtvolumen eines resultierenden Verbindungsstoff-Lösungsmittel-Gemischs, liegt, wobei unter dem Verbindungsstoff-Lösungsmittel-Gemisch ein Stoffgemisch aus dem Verbindungsstoff (110) und dem Lösungsmittel (118) verstanden wird.

9. Verfahren nach einem der Ansprüche 1 bis 8, **dadurch gekennzeichnet, dass** der Verbindungsstoff (110) vor der Beschichtung des einen oder der mehreren Bleche (112) mit einem Lösungsmittel (118) versetzt wird, wobei das Lösungsmittel (118) insbesondere eine Mischung aus Methoxypropylacetat und Butylacetat umfasst oder daraus gebildet ist.

10. Verfahren nach einem der Ansprüche 1 bis 9, **dadurch gekennzeichnet, dass** der Verbindungsstoff (110) einen Haftvermittler umfasst, wobei der Haftvermittler insbesondere ein organisch funktionalisiertes Silan, insbesondere ein Aminosilan, umfasst oder daraus gebildet ist.

11. Verfahren nach einem der Ansprüche 1 bis 10, **dadurch gekennzeichnet, dass** der Verbindungsstoff (110) einen Haftvermittler umfasst, wobei ein Anteil des Haftvermittlers in einem Bereich von ca. 0,5 Vol.-% bis ca. 6 Vol.-%, insbesondere von ca. 1 Vol.-% bis ca. 5 Vol.-%., bezogen auf ein Gesamtvolumen des Verbindungsstoffs (110) oder bezogen auf ein Gesamtvolumen eines Verbindungsstoff-Lösungsmittel-Gemischs, liegt, wobei unter dem Verbindungsstoff-Lösungsmittel-Gemisch ein Stoffgemisch aus dem Verbindungsstoff (110) und dem Lösungsmittel (118) verstanden wird.

12. Verfahren nach einem der Ansprüche 1 bis 11, **dadurch gekennzeichnet, dass** ein E-Modul des Verbindungsstoffs (110) und/oder ein E-Modul eines Verbindungsstoff-Lösungsmittel-Gemischs in einem Bereich von ca. 100 N/mm² bis ca. 1000 N/mm², insbesondere von ca. 300 N/mm² bis ca. 800 N/mm², liegt, wobei unter dem Verbindungsstoff-Lösungsmittel-Gemisch ein Stoffgemisch aus dem Verbindungsstoff (110) und dem Lösungsmittel (118) verstanden wird.

13. Verfahren nach einem der Ansprüche 1 bis 12, **dadurch gekennzeichnet, dass** der Verbindungsstoff (110), insbesondere in einem Verbindungsstoff-Lösungsmittel-Gemisch, wobei unter dem Verbindungsstoff-Lösungsmittel-Gemisch ein Stoffgemisch aus dem Verbindungsstoff (110) und dem Lösungsmittel (118) verstanden wird, mittels eines oder mehrerer der folgenden Beschichtungsverfahren auf das eine oder die mehreren Bleche (112) aufgebracht wird: Sprühen, Streichen, Gießen.

## Claims

1. Method for producing a sheet stack (100), more particularly a laminated electrical-steel sheet core (104), wherein the method comprises the following:
- coating one or more sheets (112) with a joining compound (110);
- joining two or more sheets (112) to form a sheet laminate (132) by a first activation (122) of the joining compound (110);
- dividing up the sheet laminate (132) to produce two or more sheet laminate units (140) and/or dividing out two or more sheet laminate units (140) from the sheet laminate (132); and
- joining the two or more sheet laminate units (140) to form a sheet stack (100) by a second activation (150) of the joining compound (110),
wherein the joining compound (110) comprises a resin material and an elastomer material and the joining compound (110) is admixed with a solvent (118) before the coating of the one or the two or more sheets (112), wherein the solvent (118) has an evaporation rate according to DIN 53170 of 7 to 300.

2. Method according to Claim 1, **characterized in that** a fraction of the elastomer material is in a range from about 1 vol% to about 25 vol%, more particularly from about 5 vol% to about 20 vol%, based on a total volume of the joining compound (110) or based on a total volume of a joining compound-solvent mixture, the joining compound-solvent mixture referring to a composition made up of the joining compound (110) and the solvent (118).

3. Method according to Claim 1 or 2, **characterized in that** the elastomer material comprises or is formed of a synthetic rubber material, more particularly an acrylonitrile-butadiene rubber.

4. Method according to any of Claims 1 to 3, **characterized in that** a Shore hardness A of the joining compound (110) and/or a Shore hardness A of a joining compound-solvent mixture is in a range from about 20 to about 90, more particularly from about 30 to about 80, the joining compound-solvent mixture referring to a composition made up of the joining compound (110) and the solvent (118).

5. Method according to any of Claims 1 to 4, **characterized in that** the joining compound (110), more particularly after the first activation (122) and/or the second activation (150), is electrically insulating.

6. Method according to any of Claims 1 to 5, **characterized in that** the resin material comprises or is formed of an epoxy resin material and/or a thermoset polymer material, more particularly a phenolic resin polymer material, more particularly a novolac.

7. Method according to any of Claims 1 to 6, **characterized in that** a fraction of the resin material in the joining compound (110) is in a range from about 1 vol% to about 15 vol%, more particularly from about 2 vol% to about 10 vol%, based on a total volume of the joining compound (110) or on a total volume of a joining compound-solvent mixture, the joining compound-solvent mixture referring to a composition made up of the joining compound (110) and the solvent (118).

8. Method according to any of Claims 1 to 7, **characterized in that** the joining compound (110) is admixed with a solvent (118) before the coating of the one or the two or more sheets (112), wherein a fraction of the solvent (118) is in a range from about 65 vol% to about 95 vol%, more particularly from about 70 vol% to about 90 vol%, based on a total volume of a resultant joining compound-solvent mixture, the joining compound-solvent mixture referring to a composition made up of the joining compound (110) and the solvent (118).

9. Method according to any of Claims 1 to 8, **characterized in that** the joining compound (110) is admixed with a solvent (118) before the coating of the one or the two or more sheets (112), wherein the solvent (118) more particularly comprises or is formed of a mixture of methoxypropyl acetate and butyl acetate.

10. Method according to any of Claims 1 to 9, **characterized in that** the joining compound (110) comprises an adhesion promoter, wherein the adhesion promoter more particularly comprises or is formed of an organically functionalized silane, more particularly an aminosilane.

11. Method according to any of Claims 1 to 10, **characterized in that** the joining compound (110) comprises an adhesion promoter, wherein a fraction of the adhesion promoter is in a range from about 0.5 vol% to about 6 vol%, more particularly from about 1 vol% to about 5 vol%, based on a total volume of the joining compound (110) or based on a total volume of a joining compound-solvent mixture, the joining compound-solvent mixture referring to a composition made up of the joining compound (110) and the solvent (118).

12. Method according to any of Claims 1 to 11, **characterized in that** an elasticity modulus of the joining compound (110) and/or an elasticity modulus of a joining compound-solvent mixture is in a range from about 100 N/mm² to about 1000 N/mm², more particularly from about 300 N/mm² to about 800 N/mm², the joining compound-solvent mixture referring to a composition made up of the joining compound (110) and the solvent (118).

13. Method according to any of Claims 1 to 12, **characterized in that** the joining compound (110), more particularly in a joining compound-solvent mixture, the joining compound-solvent mixture referring to a composition made up of the joining compound (110) and the solvent (118), is applied to the one or the two or more sheets (112) by means of one or more of the following coating methods: spraying, spreading, pouring.

## Revendications

1. Procédé de fabrication d'un empilement de tôles (100), en particulier d'un paquet de tôles électriques (104), le procédé comprenant les étapes suivantes :
- le revêtement d'une ou plusieurs tôles (112) avec une substance de liaison (110) ;
- la liaison de plusieurs tôles (112) pour former un stratifié de tôles (132) par une première activation (122) de la substance de liaison (110) ;
- la division du stratifié de tôles (132) pour fabriquer plusieurs unités de stratifié de tôles (140) et/ou le détourage de plusieurs unités de stratifié de tôles (140) à partir du stratifié de tôles (132) ; et
- la liaison des plusieurs unités de stratifié de tôles (140) pour former un empilement de tôles (100) par une deuxième activation (150) de la substance de liaison (110), ;
la substance de liaison (110) comprenant un matériau de résine et un matériau élastomère, et la substance de liaison (110) étant additionnée d'un solvant (118) avant le revêtement de la ou des tôles (112), le solvant (118) présentant un indice d'évaporation selon la norme **DIN** 53170 de 7 à 300.

2. Procédé selon la revendication 1, **caractérisé en ce qu'**une proportion du matériau élastomère se situe dans une plage d'environ 1 % en volume à environ 25 % en volume, en particulier d'environ 5 % en volume à environ 20 % en volume, par rapport à un volume total de la substance de liaison (110) ou par rapport à un volume total d'un mélange substance de liaison-solvant, le mélange substance de liaison-solvant étant compris comme un mélange de substances constitué de la substance de liaison (110) et du solvant (118).

3. Procédé selon la revendication 1 ou 2, **caractérisé en ce que** le matériau élastomère comprend un matériau de caoutchouc synthétique, en particulier un caoutchouc acrylonitrile-butadiène, ou est formé à partir de celui-ci.

4. Procédé selon l'une des revendications 1 à 3, **caractérisé en ce qu'**une dureté Shore A de la substance de liaison (110) et/ou une dureté Shore A d'un mélange substance de liaison-solvant se situe dans une plage d'environ 20 à environ 90, en particulier d'environ 30 à environ 80, le mélange substance de liaison-solvant étant compris comme un mélange de substances constitué de la substance de liaison (110) et du solvant (118).

5. Procédé selon l'une des revendications 1 à 4, **caractérisé en ce que** la substance de liaison (110), en particulier après la première activation (122) et/ou la deuxième activation (150), est électriquement isolante.

6. Procédé selon l'une des revendications 1 à 5, **caractérisé en ce que** le matériau de résine comprend un matériau de résine époxy et/ou un matériau polymère thermodurcissable, en particulier un matériau polymère de résine phénolique, en particulier un novolaque, ou est formé à partir de celui-ci.

7. Procédé selon l'une des revendications 1 à 6, **caractérisé en ce qu'**une proportion du matériau de résine dans la substance de liaison (110) se situe dans une plage d'environ 1 % en volume à environ 15 % en volume, en particulier d'environ 2 % en volume à environ 10 % en volume, par rapport à un volume total de la substance de liaison (110) ou à un volume total d'un mélange substance de liaison-solvant, le mélange substance de liaison-solvant étant compris comme un mélange de substances constitué de la substance de liaison (110) et du solvant (118).

8. Procédé selon l'une des revendications 1 à 7, **caractérisé en ce que** la substance de liaison (110) est additionnée d'un solvant (118) avant le revêtement de la ou des tôles (112), une proportion du solvant (118) se situant dans une plage d'environ 65 % en volume à environ 95 % en volume, en particulier d'environ 70 % en volume à environ 90 % en volume, par rapport à un volume total d'un mélange substance de liaison-solvant résultant, le mélange substance de liaison-solvant étant compris comme un mélange de substances constitué de la substance de liaison (110) et du solvant (118).

9. Procédé selon l'une des revendications 1 à 8, **caractérisé en ce que** la substance de liaison (110) est additionnée d'un solvant (118) avant le revêtement de la ou des tôles (112), le solvant (118) comprenant en particulier un mélange d'acétate de méthoxypropyle et d'acétate de butyle ou étant formé à partir de celui-ci.

10. Procédé selon l'une des revendications 1 à 9, **caractérisé en ce que** la substance de liaison (110) comprend un promoteur d'adhérence, le promoteur d'adhérence comprenant en particulier un silane fonctionnalisé organique, en particulier un aminosilane, ou étant formé à partir de celui-ci.

11. Procédé selon l'une des revendications 1 à 10, **caractérisé en ce que** la substance de liaison (110) comprend un promoteur d'adhérence, une proportion du promoteur d'adhérence se situant dans une plage d'environ 0,5 % en volume à environ 6 % en volume, en particulier d'environ 1 % en volume à environ 5 % en volume, par rapport à un volume total de la substance de liaison (110) ou par rapport à un volume total d'un mélange substance de liaison-solvant, le mélange substance de liaison-solvant étant compris comme un mélange de substances constitué de la substance de liaison (110) et du solvant (118).

12. Procédé selon l'une des revendications 1 à 11, **caractérisé en ce qu'**un module de Young de la substance de liaison (110) et/ou un module de Young d'un mélange substance de liaison-solvant se situe dans une plage d'environ 100 N/mm² à environ 1000 N/mm², en particulier d'environ 300 N/mm² à environ 800 N/mm², le mélange substance de liaison-solvant étant compris comme un mélange de substances constitué de la substance de liaison (110) et du solvant (118).

13. Procédé selon l'une des revendications 1 à 12, **caractérisé en ce que** la substance de liaison (110), en particulier dans un mélange substance de liaison-solvant, le mélange substance de liaison-solvant étant compris comme un mélange de substances constitué de la substance de liaison (110) et du solvant (118), est appliquée sur la ou les tôles (112) au moyen d'un ou plusieurs des procédés de revêtement suivants : pulvérisation, application au pinceau, coulage.
